# EUROPEAN PATENT APPLICATION

(11) **EP 4 319 302 A1**
(43) Date of publication of application: **07.02.2024**
(21) Application number: 22779464.1
(22) Date of filing: 27.01.2022
(51) Int. Cl.: H04W 36/08, H04W 92/20, H04W 88/08

(54) **RAN NODE, UE, AND METHOD**

(30) Priority: 31.03.2021 JP 2021060425
(71) Applicant: NEC Corporation, 108-8001 Tokyo (JP)
(72) Inventor: FILIN Stanislav, Tokyo 108-8001 (JP); HAYASHI Sadafuku, Tokyo 108-8001 (JP)
(74) Representative: MacDougall, Alan John Shaw
(86) International application number: PCT/JP2022/003078
(87) International publication number: WO 2022/209234

(57) **Abstract**

The present disclosure contributes to the transmission/reception of various types of information between an AI-capable RAN node and another apparatus. A radio access network (RAN) node is configured as an RAN node including an Artificial Intelligence (AI) function of performing control of communication based on information received from another apparatus. The RAN node transmits first information indicating that the RAN node is an RAN node including an AI function to an RAN node. This contributes to the transmission and reception of various types of information between AI-enabled RAN nodes and other devices.

## Description

### Technical Field

The present disclosure relates to a RAN (Radio Access Network) node, a UE (User Equipment), and a method.

### Background Art

In the 3GPP (3rd Generation Partnership Project), it has been studied how to apply artificial intelligence (AI: Artificial Intelligence) to a network in order to cope with a complex system design and an optimization problem introduced by NR (New Radio) (Non-patent Literature 1). In Non-patent Literature 1, matters to be discussed about RAN intelligence which will be realized by AI including machine learning (ML: Machine Learning) are mentioned. Specifically, in Non-patent Literature 1, as examples of the matters to be discussed in order to use an NG-RAN (Next Generation-Radio access network) node capable of cope with AI (hereinafter also referred to as an AI-capable NG-RAN node), energy saving, load distribution, mobility management, coverage optimization, and the like are mentioned.

### Citation List

### Non Patent Literature

Non-patent Literature 1: CMCC, "Revised SID: Study on enhancement for data collection for NR and ENDC", RP -201620, 3GPP TSG RAN Meeting # 89e, Electronic Meeting, September 14 -18, 2020.
Non-patent Literature 2: 3GPP TS 38.423 V16.4.0 (2021 -01), "3rd Generation Partnership Project; Technical Specification Group Radio Access Network; NG-RAN; Xn application protocol (XnAP) (Release 16)".
Non-patent Literature 3: 3GPP TS 38.331 V16.3.1 (2021 -01), "3rd Generation Partnership Project; Technical Specification Group Radio Access Network; NR; Radio Resource Control (RRC) protocol specification (Release 16)".
Non-patent Literature 4: 3GPP TS 23.501 V16.7.0 (2020 -12), "3rd Generation Partnership Project; Technical Specification Group Services and System Aspects; System architecture for the 5G System (5GS); Stage 2 (Release 16)".
Non-patent Literature 5: 3GPP TR 37.816 V16.0.0 (2019 -07), "3rd Generation Partnership Project; Technical Specification Group Radio Access Network; Study on RAN-centric data collection and utilization for LTE and NR (Release 16)".
Non-patent Literature 6: Samsung, "TP for SON BLCR for 38.423: Successful Handover Report", R3 -206048, 3GPP TSG-RAN3 Meeting # 110 e, E-Meeting, November 02 -12, 2020.
Non-patent Literature 7: Samsung, "TP for SON BLCR for 38.423: Successful Handover Report", R3 -207012, 3GPP TSG-RAN3 Meeting # 110 e, E-Meeting, November 02 -12, 2020.
Non-patent Literature 8: Samsung, "Summary of Offline Discussion on Successful Handover Report", R3 -207026, 3GPP TSG-RAN WG3 Meeting # 110 e, Online, November 2 -12, 2020.

### Summary of Invention

### Technical Problem

In the above-mentioned Non-patent Literature 1, it is stated that it is necessary to study an interface by which an AI-capable NG-RAN node can transmit/receive input/output data. As mentioned in Non-patent Literature 1, no interface by which, when an AI function is applied to an RAN node, the AI-capable RAN node transmits/receives various types of information to/from another apparatus is clearly defined.

In view of the above-described problem, an object of the present disclosure is to provide an RAN node, a UE, and a method that contribute to the transmission/reception of various types of information between an AI-capable RAN node and another apparatus.

### Solution to Problem

In a first example aspect, a radio access network (RAN) node is configured to include an Artificial Intelligence (AI) function of performing control of communication based on information received from another apparatus, in which the RAN node includes: at least one memory; and at least one processor coupled to the at least one memory, and the at least one processor is configured to transmit, to another RAN node, first information indicating that the RAN node is an RAN node including the AI function.

In a second example aspect, a radio access network (RAN) node is configured to include an Artificial Intelligence (AI) function of performing control of communication based on information received from another apparatus, in which the RAN node includes: at least one memory; and at least one processor coupled to the at least one memory, and the at least one processor is configured to transmit, to another RAN node, a first message requesting the other RAN node to transmit Handover (HO) configuration information set in the other RAN node to the RAN node, and receive, from the other RAN node, a second message containing the HO configuration information.

In a third example aspect, a radio access network (RAN) node is configured to include an Artificial Intelligence (AI) function of performing control of communication based on information received from another apparatus, in which the RAN node includes: at least one memory; and at least one processor coupled to the at least one memory, and the at least one processor is configured to receive a message containing information about quality of the cell measured by a User Equipment (UE) after the UE has performed a handover from a first cell to a second cell and an indicator indicating whether or not the handover from the first cell to the second cell has been normally performed from another RAN node serving the second cell.

In a fourth example aspect, a radio access network (RAN) node is configured to include an Artificial Intelligence (AI) function of performing control of communication based on information received from another apparatus, in which the RAN node includes: at least one memory; and at least one processor coupled to the at least one memory, and the at least one processor is configured to transmit a message containing at least one of handover (HO) configuration information and assistance information related to a handover to at least one of another RAN node and a User Equipment (UE).

In a fifth example aspect, a radio access network (RAN) node includes: at least one memory; and at least one processor coupled to the at least one memory, in which the at least one processor is configured to receive, from another RAN node including an Artificial Intelligence (AI) function of performing control of communication based on information received from another apparatus, first information indicating that the other RAN node is an RAN node including the AI function.

In a sixth example aspect, a radio access network (RAN) node includes: at least one memory; and at least one processor coupled to the at least one memory, in which the at least one processor is configured to receive, from another RAN node including an Artificial Intelligence (AI) function of performing control of communication based on information received from another apparatus, a first message requesting the RAN node to transmit Handover (HO) configuration information set in the RAN node, and transmit, to the other RAN node, a second message containing the HO configuration information to the other RAN node.

In a seventh example aspect, a radio access network (RAN) node includes: at least one memory; and at least one processor coupled to the at least one memory, in which the at least one processor is configured to transmit a message containing information about quality of the cell measured by a User Equipment (UE) after the UE has performed a handover from a first cell to a second cell and an indicator indicating whether or not the handover from the first cell to the second cell has been normally performed to another RAN node including an Artificial Intelligence (AI) function of performing control of communication based on information received from another apparatus.

In an eighth example aspect, a radio access network (RAN) node includes: at least one memory; and at least one processor coupled to the at least one memory, in which the at least one processor is configured to receive, from another RAN node including an Artificial Intelligence (AI) function of performing control of communication based on information received from another apparatus, a message containing at least one of handover (HO) configuration information and assistance information related to a handover.

In a ninth example aspect, a User Equipment (UE) includes: at least one memory; and at least one processor coupled to the at least one memory, in which the at least one processor is configured to transmit a measurement report containing information about quality of the cell measured by the UE after the UE has performed a handover from a first cell to a second cell to a radio access network (RAN) node serving the second cell.

In a tenth example aspect, a User Equipment (UE) includes: at least one memory; and at least one processor coupled to the at least one memory, in which the at least one processor is configured to receive, from an RAN node including an Artificial Intelligence (AI) function of performing control of communication based on information received from another apparatus, a message containing Handover (HO) configuration information and assistance information related to a handover.

An eleventh example aspect is a method performed by a radio access network (RAN) node, in which the RAN node is configured to include an Artificial Intelligence (AI) function of performing control of communication based on information received from another apparatus, and the method includes transmitting first information indicating that the RAN node is an RAN node including the AI function to another RAN node.

A twelfth example aspect is a method performed by a radio access network (RAN) node, in which the RAN node is configured to include an Artificial Intelligence (AI) function of performing control of communication based on information received from another apparatus, and the method includes: transmitting, to another RAN node, a first message requesting the other RAN node to transmit Handover (HO) configuration information set in the other RAN node to the RAN node; and receiving, from the other RAN node, a second message containing the HO configuration information.

A thirteenth example aspect is a method performed by a radio access network (RAN) node, in which the RAN node is configured to include an Artificial Intelligence (AI) function of performing control of communication based on information received from another apparatus, and the method includes receiving a message containing information about quality of the cell measured by a User Equipment (UE) after the UE has performed a handover from a first cell to a second cell and an indicator indicating whether or not the handover from the first cell to the second cell has been normally performed from another RAN node serving the second cell.

A fourteenth example aspect is a method performed by a radio access network (RAN) node, in which the RAN node is configured to include an Artificial Intelligence (AI) function of performing control of communication based on information received from another apparatus, and the method includes transmitting a message containing at least one of handover (HO) configuration information and assistance information related to a handover to at least one of another RAN node and a User Equipment (UE).

### Advantageous Effects of Invention

According to the present disclosure, it is possible provide an RAN node, a UE, and a method that contribute to the transmission/reception of various types of information between an AI-capable RAN node and another apparatus.

### Brief Description of Drawings

Fig. 1 shows an example of a configuration of a communication system according to a first example embodiment;
Fig. 2 shows an example of a configuration of an RAN node;
Fig. 3 shows an example of operations performed by the communication system according to the first example embodiment;
Fig. 4 shows an example of operations performed by a communication system according to a second example embodiment;
Fig. 5 shows an example of a configuration of a communication system according to a third example embodiment;
Fig. 6 shows an example of a configuration of a UE;
Fig. 7 shows an example of operations performed by the communication system according to the third example embodiment;
Fig. 8 shows an example of operations performed by a communication system according to a fourth example embodiment;
Fig. 9 shows an example of a procedure for acquiring cell configuration information;
Fig. 10 shows a procedure for acquiring cell configuration information;
Fig. 11 shows a procedure for acquiring cell load information;
Fig. 12 shows a procedure for acquiring cell load information;
Fig. 13 shows a procedure for acquiring HO configuration information;
Fig. 14 shows a procedure for acquiring HO configuration information;
Fig. 15 shows a procedure related to the transmission of information related to an HO in a UE;
Fig. 16 shows a procedure related to the transmission of information related to an HO in a UE;
Fig. 17 shows an example of an HO procedure;
Fig. 18 shows a procedure related to the transmission of information related to an HO in a UE;
Fig. 19 shows a procedure related to the transmission of information related to an HO in a UE;
Fig. 20 shows an example of a configuration of a communication system according to a ninth example embodiment;
Fig. 21 shows a procedure for acquiring network information;
Fig. 22 shows an example of a procedure related to transmission of HO-relevant information;
Fig. 23 shows an example of a procedure related to transmission of HO-relevant information;
Fig. 24 shows a procedure related to the transmission of HO-relevant information;
Fig. 25 shows a procedure related to the transmission of HO-relevant information;
Fig. 26 shows an example of a configuration of a communication system according to an eleventh example embodiment;
Fig. 27 shows an example of operations performed by the communication system according to the eleventh example embodiment;
Fig. 28 is a block diagram showing an example of a configuration of a RAN node according to each example embodiment;
Fig. 29 is a block diagram showing an example of a configuration of a UE according to each example embodiment; and
Fig. 30 is a block diagram showing an example of a configuration of a network apparatus according to each example embodiment.

### Example Embodiment

Example embodiments according to the present disclosure will be described hereinafter with reference to the drawings. Note that the following description and the drawings are omitted and simplified as appropriate for clarifying the explanation. Further, the same elements are denoted by the same reference numerals (or symbols) throughout the drawings, and redundant descriptions thereof are omitted as required.

### (First Example Embodiment)

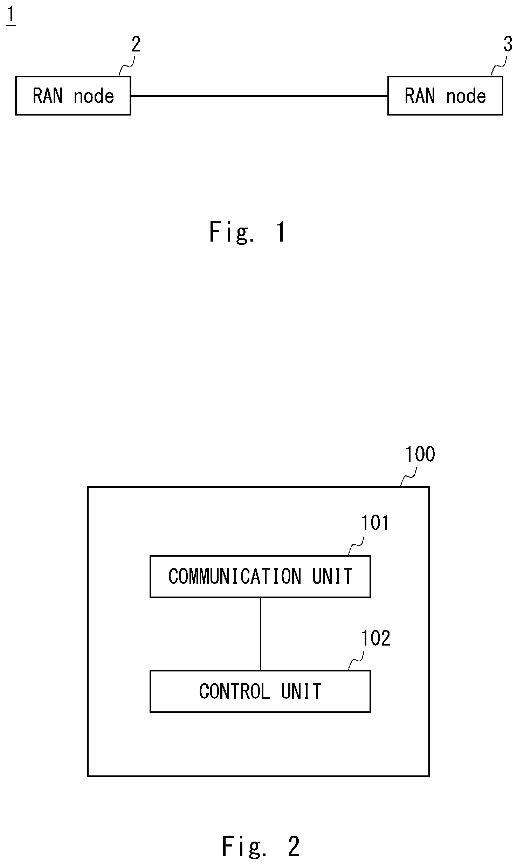

A communication system 1 according to a first example embodiment will be described with reference to Fig. 1. Fig. 1 shows an example of a configuration of a communication system according to the first example embodiment. The communication system 1 is, for example, a fifth generation mobile communication system (a 5G system). The 5G System is NR (New Radio Access), which is the fifth generation (5G) radio access technology. Note that the communication system 1 is not limited to the 5G mobile communication system, and may be an LTE (Long Term Evolution) system or an LTE-Advanced system. The communication system 1 may be a sixth generation mobile communication system. Further, the communication system 1 may be other radio communication systems including at least a radio access network (RAN: Radio Access Network) node and a user equipment (UE: User Equipment). The communication system 1 may be a communication system in which an ng-eNB (LTE evolved NodeB), which is a base station in the LTE (Long Term Evolution) is connected to a 5G core network (5GC: 5G Core network) via an NG interface.

The communication system 1 includes an RAN node 2 and an RAN node 3. Note that although only two RAN nodes are shown in Fig. 1, the communication system 1 may include three or more RAN nodes.

Each of the RAN nodes 2 and 3 may be a gNB. The gNB is a node providing NR user plane and control plane protocol terminations towards the UE, and connected via the NG interface to the 5GC. Each of the RAN nodes 2 and 3 may be an ng-eNB. The ng-eNB is a node providing E-UTRA (Evolved Universal Terrestrial Radio Access) user plane and control plane protocol terminations towards the UE, and connected via the NG interface to the 5GC. Each of the RAN nodes 2 and 3 may be a CU (Central Unit) in a C-RAN (cloud RAN) configuration, or may be a gNB-CU. The gNB-CU is a logical node hosting RRC (Radio Resource Control), SDAP (Service Data Adaptation Protocol) and PDCP (Packet Data Convergence Protocol) protocols of the gNB. Alternatively, the gNB-CU is a logical node hosting RRC and PDCP protocols of the en-gNB that controls the operation of one or more gNB-DUs (gNB-Distributed Units). The gNB-CU terminates the F1 interface connected with the gNB-DU. Each of the RAN nodes 2 and 3 may be a CP (Control Plane) Unit, or may be a gNB-CU-CP. The gNB-CU-CP (gNB-CU-Control Plane) is a logical node hosting the RRC protocol, and the control plane part of the PDCP protocol of the gNB-CU for an en-gNB or a gNB. The gNB-CU-CP terminates the E1 interface connected with the gNB-CU-UP (gNB-CU-User Plane) and the F1-C interface connected with the gNB-DU. The gNB-CU-UP is a logical node hosting the user plane part of the PDCP protocol of the gNB-CU for an en-gNB. The gNB-CU-UP terminates the E1 interface connected with the gNB-CU-CP and the F1-U interface connected with the gNB-DU.

Note that each of the RAN nodes 2 and 3 may be an eNB or an eNB-CU. Further, each of the RAN nodes 2 and 3 may be a EUTRAN (Evolved Universal Mobile Telecommunications System (UMTS) Terrestrial Radio Access Network) node or an NG-RAN (Next Generation Radio Access Network) node. The EUTRAN node may be an eNB or an en-gNB. The NG-RAN node may be a gNB or an ng-eNB. The en-gNB provides NR user plane and control plane protocol terminations toward the UE, and operates as a secondary node in the EN-DC (NR Dual Connectivity).

The RAN nodes 2 and 3 establish an inter-node interface and communicate with each other via the established inter-node interface. The inter-node interface may be an Xn interface, an X2 interface, or other types of inter-node interfaces.

The RAN node 2 is an RAN node capable of coping with AI (hereinafter also referred to as an AI-capable RAN node). The RAN node 2 may also be referred to as an RAN node equipped with an AI function. The RAN node 2 may also be referred to as an RAN node including an AI function. The RAN node 2 may also be referred to as an AI-enhanced RAN node. The RAN node 2 includes an AI function of performing control of communication based on information received from other apparatuses (other network elements) including the RAN node 3 and a user equipment (UE: User Equipment) (not shown). The RAN node 2 manages other RAN nodes including the RAN node 3.

In the present disclosure, "an AI-capable RAN node", "an RAN node equipped with an AI function" and "an RAN node including an AI function" mean an RAN node using an AI model that performs control of communication based on information received from other apparatuses (other network elements). For example, the RAN node 2 may communicate with a RAN intelligence apparatus (not shown), and operate as an RAN node equipped with an AI function by using an AI model held by (i.e., included in) the RAN intelligence apparatus. Alternatively, the RAN node 2 may have a function of a RAN intelligence apparatus, and operate as an RAN node equipped with an AI function by using an AI model held by the RAN intelligence apparatus. Alternatively, the RAN node 2 may acquire an AI model from a RAN intelligence apparatus, and operate as an RAN node equipped with an AI function by using the acquired AI model.

The RAN intelligence apparatus is, for example, a control apparatus for making the RAN intelligent, and is a control apparatus that controls communication in the RAN. The RAN intelligence apparatus may be, for example, an RIC (RAN Intelligent Controller) specified in the O-RAN (Open-RAN). The RAN intelligence apparatus performs, for example, policy management, analysis of various types of information of the RAN, management of AI-based functions, load distribution for each UE, management of radio resources, management of QoS (Quality of Service), and mobility management such as handover control.

An example of a configuration of an RAN node 100 including the RAN nodes 2 and 3 will be described with reference to Fig. 2. Fig. 2 shows an example of a configuration of an RAN node. The RAN node 100 includes a communication unit 101 and a control unit 102. The communication unit 101 and the control unit 102 may be software or modules by which processing is performed as a processor executes a program stored in a memory. Further, the communication unit 101 and the control unit 102 may be hardware such as a circuit or a chip.

The communication unit 101 connects to other RAN nodes included in an access network, and to a core network node, and communicates with them. The communication unit 101 connects to and communicates with a UE. The communication unit 101 receives various types of information from the other RAN nodes, the core network node, and the UE. The communication unit 101 transmits various types of information to the other RAN nodes, the core network node, and the UE.

In the case where the RAN node 100 operates as the RAN node 2 and the RAN intelligence apparatus is provided outside the RAN node 2, the communication unit 101 connects to and communicates with the RAN intelligence apparatus. In this case, the communication unit 101 may communicate with the RAN intelligence apparatus, and the control unit 102 may use an AI model held by the RAN intelligence apparatus. Alternatively, the communication unit 101 may communicate with the RAN intelligence apparatus and acquire the AI model held by the RAN intelligence apparatus.

The control unit 102 reads out and executes various types of information and programs stored in the memory, and thereby performs various types of processing of the RAN node 100. The control unit 102 performs processing according to one or all of setting information items such as various types of information elements (IEs), various types of fields, and various types of conditions contained in a message received by the communication unit 101. The control unit 102 is configured so as to be able to perform processing in a plurality of layers. The plurality of layers may include a Physical layer, a MAC (Media Access Control) layer, an RLC (Radio Link Control) layer, a PDCP layer, an RRC layer, an NAS (non Access Stratum) layer, and the like.

In the case where the RAN node 100 is the RAN node 2, the control unit 102 may control communication in the RAN based on information received by the communication unit 101 by using the AI model. Specifically, the control unit 102 may input information received by the communication unit 101 into the AI model, and output various types of information related to the control of communication in the RAN and/or the control of communication by the UE. The control unit 102 may control the RAN and the UE by transmitting such various types of information to the RAN node and the UE. The control unit 102 may machine-trains the AI model based on the information received by the communication unit 101.

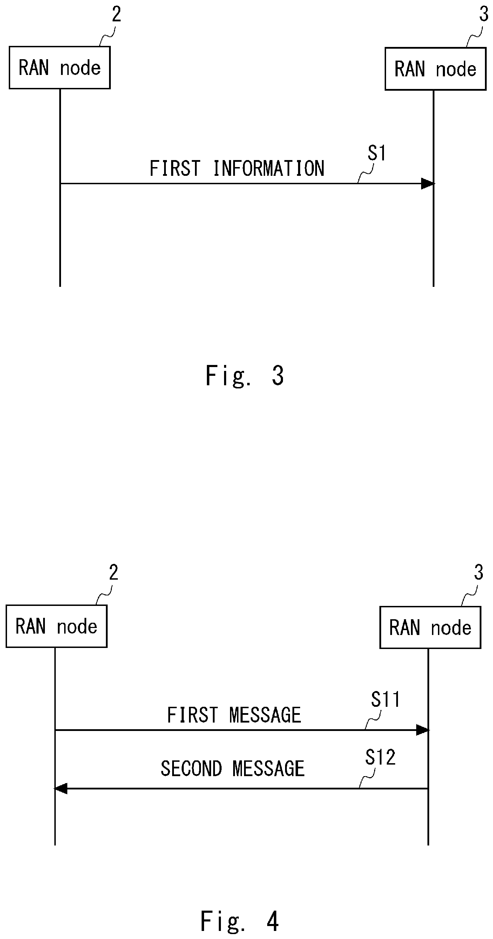

Next, an example of operations performed by the communication system 1 will be described with reference to Fig. 3. Fig. 3 shows an example of operations performed by the communication system according to the first example embodiment.

As shown in Fig. 3, in a step S1, the RAN node 2 transmits first information indicating that the RAN node 2 is an RAN node including an AI function to the RAN node 3 via the inter-node interface. Note that the first information may be information indicating whether or not the RAN node 2 is an RAN node including an AI function. Further, the first information may be information indicating that the RAN node 2 proposes to the RAN node 3 that the RAN node 2 be managed by a RAN node including an AI function. The first information may further include information indicating that the RAN node 2 proposes to the RAN node 3 that the RAN node 2 be managed by a RAN node including an AI function in addition to the information indicating that the RAN node 2 is a RAN node including an AI function. In other words, the first information may be information implicitly indicating that the RAN node 2 is a RAN node including an AI function.

Note that the RAN node 2 may incorporate the first information into an inter-node interface establishment request message and transmit this message to the RAN node 3. Alternatively, the RAN node 2 may incorporate the first information into a message for establishing a management relationship between the RAN node 2, which is a RAN node including an AI function (an AI-enhanced RAN node), and the RAN node 3, and transmit this message to the RAN node 3. The inter-node interface establishment request message may be expressed as an Interface setup request message. The inter-node interface establishment request message may be, for example, an XN SETUP REQUEST message.

Note that the first information may be an AI-enhanced gNB indicator. The AI-enhanced gNB indicator IE may be, for example, of a BOOLEAN type, and a "true" or a "false" may be set therein. When the "true" is set in the AI-enhanced gNB indicator IE, the AI-enhanced gNB indicator IE may indicate that RAN node 2 is an AI-enhanced RAN node. When the "false" is set in the AI-enhanced gNB indicator IE, the AI-enhanced gNB indicator IE may indicate that RAN node 2 is not an AI-enhanced RAN node. Since the RAN node 2 is a RAN node including an AI function, the "true" may be set in the AI-enhanced gNB indicator IE.

Note that when the first information is not contained in the inter-node interface establishment request message transmitted from the RAN node 2, the RAN node 3 may consider that the RAN node 2 is not an RAN node including an AI function.

Note that the RAN node 3 may transmit, to the RAN node 2, second information indicating whether or not the RAN node 3 accepts to be managed by the RAN node 2, which is the AI-enhanced RAN node. The RAN node 3 may incorporate the second information into an inter-node interface establishment response message and transmit this message to the RAN node 2. Alternatively, the RAN node 3 may incorporate the second information into a message for establishing a management relationship between the RAN node 2, which is a RAN node including an AI function (an AI-enhanced RAN node), and the RAN node 3, and transmit this message to the RAN node 2. The inter-node interface establishment response message may be expressed as an Interface setup response message. The inter-node interface establishment response message may be, for example, an XN SETUP RESPONSE message.

The second information may be a Management relationship confirmed IE. The Management relationship confirmed IE may be, for example, of a BOOLEAN type, and a "true" or a "false" may be set therein. When the "true" is set in the Management relationship confirmed IE, the Management relationship confirmed IE may indicate that the RAN node 3 accepts to be managed by the RAN node 2, which is an AI-enhanced RAN node. When the "false" is set in the Management relationship confirmed IE, the Management relationship confirmed IE may indicate that the RAN node 3 does not accept to be managed by the RAN node 2, which is an AI-enhanced RAN node.

As described above, the RAN node 2 explicitly or implicitly notifies the RAN node 3 that the RAN node 2 includes an AI function of controlling communication in the RAN by transmitting the first information to the RAN node 3. As a result, the RAN node 3 can recognize that the RAN node 2 includes the AI function. As described above, according to the RAN nodes 2 and 3, the AI-capable RAN node 2 contributes to the transmission/reception of information to/from the RAN node 3.

### (Second Example Embodiment)

Next, a second example embodiment will be described. A communication system according to the second example embodiment is similar to that in the first example embodiment shown in Fig. 1. Further, the configuration of each of the RAN nodes 2 and 3 is similar to that in the first example embodiment shown in Fig. 2. In the second example embodiment, a procedure in which the RAN node 3 transmits HO (Handover) configuration information set in the RAN node 3 to the RAN node 2. Note that, in the following description, a "handover" may also be expressed as a "HO" by using its abbreviation.

An example of operations performed by the communication system according to the second example embodiment will be described with reference to Fig. 4. Fig. 4 shows an example of operations performed by the communication system according to the second example embodiment.

As shown in Fig. 4, in a step S 11, the RAN node 2 transmits, to the RAN node 3, a first message requesting the RAN node 3 to transmit HO configuration information set in the RAN node 3 to the RAN node 2.

In a step S12, in response to the reception of the above-described request message, the RAN node 3 transmits a second message containing the HO configuration information set in the RAN node 3 to the RAN node 2. The RAN node 2 receives the HO configuration information set in the RAN node 3 by receiving this response message. The response message may include HO configuration information for each of cells served by the RAN node 3. In other words, the HO configuration information is information on a cell-by-cell basis, and the response message may contain the same number of pieces of HO configuration information as the number of cells served by the RAN node 3. Further, the response message may contain an HO parameter IE, and HO configuration information may be set in the HO parameter IE.

The HO configuration information is information containing setting values of HO parameters set in the RAN node 3. The HO parameter may define when a handover is triggered, or when measurement of a handover (HO measurement) is triggered. Further, the HO parameter may define which cells are considered to be candidate cells for the handover.

Note that the HO configuration information may contain setting values of HO parameters related to HO events. The HO events may be Events A1 to A6 defined in Non-patent Literature 3 (TS38.331), and the HO parameters may be HO parameters related to the Events A1 to A6 or HO parameter sets related thereto. In other words, the HO configuration information may contain setting values of HO parameter sets related to HO events. The HO configuration information may contain HO causes associated with HO events contained in the HO configuration information. The HO causes may indicate for which purposes of HOs the HO parameter sets are used. As the HO cause, HO causes defined in Non-patent Literature 2 may be used. Examples of the HO cause include Handover Desirable for Radio Reasons, Reduce Load in Serving Cell, and Resource Optimisation Handover. In the following description, the HO parameter or the HO parameter set may be referred simply as a parameter or a parameter set.

Note that the HO configuration information may contain setting values of parameters related to some of the Events A1 to A6, and may contain setting values of parameters related to events different from the Events A1 to A6.

The HO parameters (the HO parameter set) related to Events A1 to A6 may be, for example, the below-shown parameters. The parameter set for the Event AI may include a1-Threshold, reportOnLeave, hysteresis, and timeToTrigger. The parameter set for the Event A2 may include a2-Threshold, reportOnLeave, hysteresis, and timeToTrigger. The parameter set for the Event A3 may include a3-Offset, reportOnLeave, hysteresis, timeToTrigger, and useWhiteCellList. The parameter set for the Event A4 may include a4-Threshold, reportOnLeave, hysteresis, timeToTrigger, and useWhiteCellList. The parameter set for the Event A5 may include a5 - Threshold 1, a5-Threshold2, reportOnLeave, hysteresis, timeToTrigger, and useWhiteCellList. The parameter set for the Event A6 may include a6-Offset, reportOnLeave, hysteresis, timeToTrigger, and useWhiteCellList. Note that regarding the above-described parameters related to the HO events, parameters having the same names are included in a plurality of events, their setting values may be unique to the respective events. Further, the above-described HO parameters IE may also contain information in which a setting value of each of the above-described parameters is set. Alternatively, the HO parameters IE may contain one parameter having an OCTET_STRING type, which refers to the definitions of HO parameters shown in Non-patent Literature 3.

Note that the HO configuration information may be, for example, information shown in the below-shown table. For example, when the RAN node 3 is an NG-RAN node and forms two cells (a Cell ID#X and a Cell ID#Z), the HO configuration information may contain a parameter set containing the Cell ID#X and the Cell ID#Z. Further, when the RAN node 3 sets a plurality of parameter sets for each cell, the HO configuration information may contain the same number of pieces of information as the number of parameter sets. The HO configuration information may contain a Cell ID for identifying each cell, an HO parameter set ID for identifying each parameter set, setting values of HO parameters included in the HO parameter sets, and HO causes. The HO parameter setting values correspond to "HO parameters specific to this set" in the below-shown table. The HO causes correspond to "Information how this set is used for HO purpose" in the below-shown table. Further, when the RAN node 3 manages one or more DUs, the HO configuration information may the same number of pieces of contain information as the number of DUs managed by the RAN node 3. In this case, the HO configuration information may contain a DU ID for identifying each DU, a Cell ID for identifying each cell, an HO parameter set ID for identifying each parameter set, setting values of HO parameters included in the HO parameter set, and HO causes.

**[Table 1]**

| | | | | | |
|---|---|---|---|---|---|
| NG-RAN node ID:# 1 | | | | | |
| | ➢ (Conditional) DU ID 1..A | | | | |
| | | ✧ Cell ID #X | | | |
| | | | • HO parameter set ID 1 | | |
| | | | | ➢ HO parameters specific to this set: xx | |
| | | | | ➢ Information how this set is used for HO purposes: xx | |
| | | | • HO parameter set ID 2 | | |
| | | | | ➢ HO parameters specific to this set: yy | |
| | | | | ➢ Information how this set is used for HO purposes: yy | |
| | | | | | ... |
| | | | • HO parameter set ID N | | |
| | | | | ➢ HO parameters specific to this set: zz | |
| | | | | ➢ Information how this set is used for HO purposes: zz | |
| | | | | | ... |
| | | ✧ Cell ID #Z | | | |
| | | | • HO parameter set ID 1 | | |
| | | | | ➢ HO parameters specific to this set: xx | |
| | | | | ➢ Information how this set is used for HO purposes: xx | |
| | | | | | ... |
| | | | • HO parameter set ID M | | |
| | | | | ➢ HO parameters specific to this set: zz | |
| | | | | ➢ Information how this set is used for HO purposes: zz | |

Note that the step S12 may be performed when the HO parameters of all the UEs in each cell served by the RAN node 3 are the same as each other. The RAN node 3 may determine, for each cell, whether the HO parameters of all the UEs are the same as each other. Then, when there is at least one cell in which the HO parameters of all the UEs are the same as each other, the RAN node 3 may perform the step S12. In this way, each of a plurality of UEs does not need to notify the RAN node 2, which is the AI-enhanced RAN node, of the HO parameters of that UE, thus making it possible to prevent a large amount of radio resources from being consumed.

As described above, the RAN node 2 can receive HO configuration information set in the RAN node 3. Therefore, according to the RAN nodes 2 and 3, the AI-capable RAN node 2 contributes to the transmission/reception of information to/from the RAN node 3.

### (Third Example Embodiment)

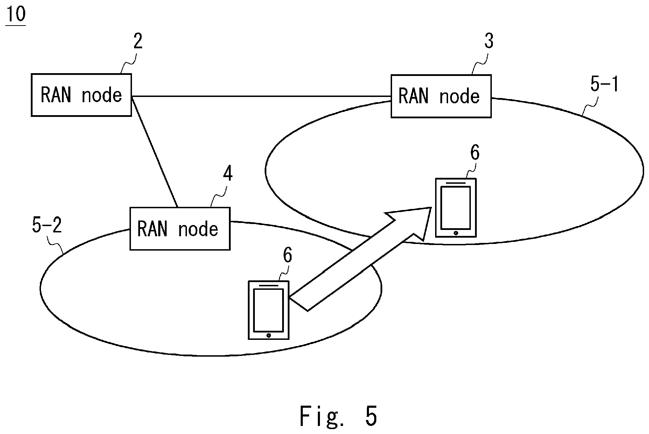

Next, a third example embodiment will be described. A communication system 10 according to the third example embodiment will be described with reference to Fig. 5. Fig. 5 shows an example of a configuration of a communication system according to the third example embodiment.

The communication system 10 includes RAN nodes 2 to 4 and a UE 6. The RAN nodes 2 and 3 correspond to the RAN nodes 2 and 3 in the first example embodiment shown in Fig. 1. The communication system 10 further includes the RAN node 4 and the UE 6 in addition to the configuration of the communication system 1 in the first example embodiment shown in Fig. 1. The configuration of each of the RAN nodes 2 and 3 is basically similar to that in the first example embodiment shown in Fig. 2. In this example embodiment, the part of the configuration of the RAN nodes 2 and 3 that is different from that in the first example embodiment is described. Note that this example embodiment is described under the assumption the RAN nodes 2, 3 and 4 have already established an inter-node interface(s) among them. Further, the communication system 10 may include four or more RAN nodes, and/or two or more UEs.

The RAN node 4 may be an eNB or a gNB as in the case of the RAN nodes 2 and 3. The RAN node 4 may be a CU. The RAN node 4 may be a CU-CP or a combination of a CU-CP and a CU-UP. Further, the RAN node 4 may be a EUTRAN node or an NG-RAN node. The EUTRAN node may be an eNB or an en-gNB. The NG-RAN node may be a gNB or an ng-eNB. The RAN node 4 is included in the RAN node 100 shown in Fig. 2, and includes a communication unit 101 and a control unit 102 shown in Fig. 2.

The RAN node 3 serves at least one cell 5-1. The RAN node 3 operates the cell 5-1, and connects to and communicates with a UE(s) present in the cell 5-1. The RAN node 4 serves at least one cell 5-2. The RAN node 4 operates the cell 5-2, and connects to and communicates with a UE(s) present in the cell 5-2. The UE 6 performs a handover from the cell 5-2 served by the RAN node 4 to the cell 5-1 served by the RAN node 3. The cell 5-2 may be referred to as a source cell, and the cell 5-1 may be referred to as a target cell. The RAN node 4 may be referred to as a source RAN node, and the RAN node 3 may be referred to as a target RAN node. The cell 5-1 is a serving cell after the handover, and the cell 5-2 may be referred to as a last serving cell.

The RAN nodes 3 and 4, and the UE 6 performs a handover procedure as the UE 6 moves from the cell 5-2, which is the source cell, to the cell 5-1, which is the target cell. The UE 6 communicates with the RAN node 3 serving the cell 5-1 after the handover procedure is completed. The UE 6 is configured so as to be able to communicate with the RAN node 2 via the RAN node 3.

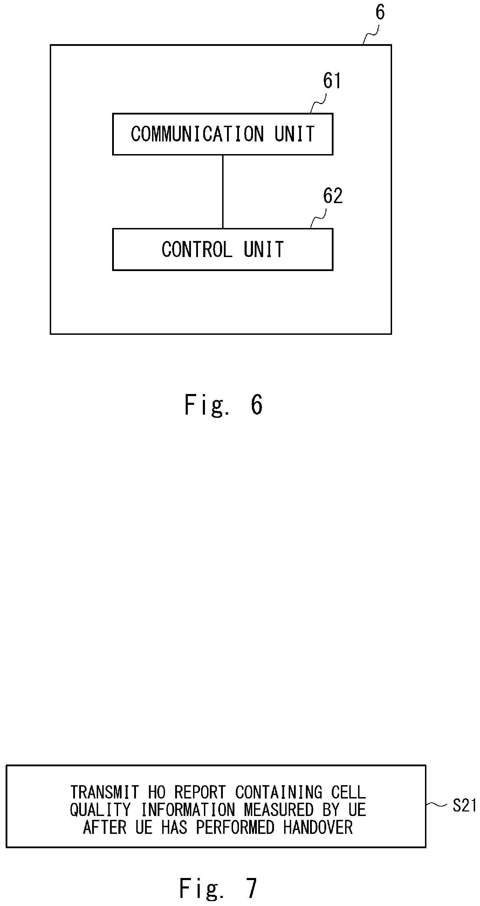

Next, an example of a configuration of the UE 6 will be described with reference to Fig. 6. Fig. 6 shows an example of the configuration of the UE. The UE 6 includes a communication unit 61 and a control unit 62. The communication unit 61 and the control unit 62 may be software or modules by which processing is performed as a processor executes a program stored in a memory. Further, the communication unit 61 and the control unit 62 may be hardware such as a circuit or a chip.

The communication unit 61 transmits/receives an RRC message and the like to/from the RAN nodes 3 and 4. The communication unit 61 includes an antenna (not shown), a receiver (not shown), and a transmitter (not shown). The receiver outputs a reception signal, which is obtained by converting a radio signal received by the antenna into a baseband signal, to the control unit 62. The transmitter transmits a transmission signal, which is obtained by converting a baseband signal output from the control unit 62 into a radio signal, from the antenna.

The control unit 62 reads out and executes various types of information and programs stored in the memory, and thereby performs various types of processing of the UE 6. The control unit 62 performs processing according to one or all of setting information items such as various types of information elements (IEs), various types of fields, and various types of conditions contained in a message received by the communication unit 61. The control unit 62 is configured so as to be able to perform processing in a plurality of layers. The plurality of layers may include, for example, a Physical layer, a MAC layer, an RLC layer, a PDCP layer, an RRC layer, a NAS layer, and the like

Next, an example of operations performed by the communication system 10 according to the third example embodiment will be described with reference to Fig. 7. Fig. 7 shows an example of operations performed by the communication system according to the third example embodiment. In the third example embodiment, a procedure in which the RAN node 2 receives, from the UE 6 and the RAN node 3, information about quality of a cell (hereinafter also referred to as cell quality information) which can be used for the control of communication in the RAN is provided.

As shown in Fig. 7, in a step S21, the RAN node 3 transmits, to the RAN node 2, a message containing cell quality information that is measured (i.e., obtained) by the UE 6 after the UE 6 has performed the handover from the cell 5-2 to the cell 5-1. The cell quality information may be cell reference signal measurement information indicating information about measurement of a cell reference signal. The UE 6 may transmit a Measurement Report containing the cell quality information to the RAN node 3, which serves the cell 5-1, after the UE 6 has performed the handover from the cell 5-2 to the cell 5-1. Note that in the case where the UE 6 can determine whether or not the handover from the cell 5-2 to the cell 5-1 has been normally performed, the UE 6 may incorporate an indicator indicating whether or not the handover is normal into the measurement report. The RAN node 3 transmits, to the RAN node 2, a message containing the cell quality information obtained by the UE 6 and the indicator indicating whether or not the handover of the UE 6 from the cell 5-2 to the cell 5-1 has been normally performed. Note that in the case where the UE 6 can determine whether or not the handover from the cell 5-2 to the cell 5-1 has been normally performed, the RAN node 3 may set an indicator contained in the measurement report in the above-described message. Alternatively, the RAN node 3 may determine whether or not the handover from cell 5-2 to cell 5-1 has been normally performed, and the RAN node 3 may set the aforementioned indicator in the aforementioned message. Further, the UE 6 may transmit the cell quality information (the cell reference signal measurement information) to the RAN node 3 via one or more RRC signaling.

Note that the measurement report may include, for example, the below-shown information.

**[Table 2]**

| | | | | |
|---|---|---|---|---|
| ➢ UE ID | | | | |
| | ✧ UE report ID 1..1 | | | |
| | | • Normal/abnormal HO indicator | | |
| | | • Source cell ID | | |
| | | | ➢ Reference signal measurement information | |
| | | • Target cell ID 1..L | | |
| | | | ➢ Reference signal measurement information | |
| | | • Source cell ID | | |
| | | | ➢ HO parameter set ID 1..J | |
| | | | | ✧ HO parameters specific to this set |
| | | | | ✧ Information how this set was used for HO purposes |
| | | • If abnormal, RLF report | | |

As shown above, the measurement report may contain a UE ID for identifying the UE 6, a UE report ID for identifying the measurement report, and a Normal/abnormal HO indicator indicating the above-described indicator. The measurement report may contain Reference signal measurement information indicating cell reference signal measurement information measured (i.e., obtained) for a reference signal(s) for the cell 5-2, which is the source cell, and the cell 5-1, which is the target cell. The measurement report may contain HO parameters (an HO parameter set) for the cell 5-2, which is the source cell, and the purpose of the HO for which the HO parameter set is used. When the Normal/abnormal HO indicator indicates that the HO is an abnormal HO, the measurement report may contain radio link failure (RLF) report information.

Note that in the case where the UE 6 can determine whether or not the handover from the cell 5-2 to the cell 5-1 has been normally performed, the UE 6 may incorporate the Normal/abnormal HO indicator into the measurement report. Further, the UE 6 may transmit the cell quality information (the cell reference signal measurement information) to the RAN node 3 via one or more RRC signaling. Further, the RLF report information may be contained in one measurement report together with the cell quality information (the cell reference signal measurement information), and/or may be transmitted to the RAN node 3 in a procedure different from that for the measurement report containing the cell quality information (the cell reference signal measurement information).

The measurement report may contain HO configuration information that was used to trigger the handover performed by the UE 6. The HO configuration information contained in the measurement report may contain information indicating an HO event used to trigger the handover performed by the UE 6, a setting value(s) of an HO parameter(s) corresponding to this HO event, and an HO cause corresponding to the HO event. The HO cause may indicate for which purposes of HOs the HO event is used. The information indicating the HO event may include the name of the HO event. The HO event may be one of Events A1 to A6. As the HO cause, an HO cause defined in Non-patent Literature 2 may be used. For example, the HO cause may include at least one of Handover Desirable for Radio Reasons, a Reduce Load in Serving Cell, and a Resource Optimisation Handover.

Note that the message transmitted from the RAN node 3 to the RAN node 2 may contain QoS (Quality of Service) information about QoS in addition to the information contained in the measurement report transmitted from the UE 6 to the RAN node 3. The QoS information may be information about configurations (settings) (hereinafter also referred to as configuration information or setting information) of a QoS flow and a QoS parameter(s). The QoS flow may be referred to as a UE QoS flow. The QoS flow and the QoS parameter may be used for a UE that requires special processing. The QoS flow and the QoS parameter may be used for a UE that requires a very high uplink data rate. As shown in Non-patent Literature 4 (TS23.501), for example, a QoS parameter related to a downlink or uplink data transmission session such as a downlink or uplink application may be set for the QoS flow. The QoS parameter may include a minimum data rate, a maximum delay, and the like that have to be complied with during the transmission of data related to the QoS flow.

Note that the message transmitted from the RAN node 3 to the RAN node 2 may contain information contained in measurement reports that the RAN node 3 has received from a plurality of UEs. In other words, the RAN node 3 may receive measurement reports from several UEs, and then may aggregate information contained in the measurement reports of these UEs and transmit a message containing the aggregated information to the RAN node 2. Alternatively, the RAN node 3 may transmit the above-described message to the RAN node 2 every time it receives a measurement report from one UE.

As described above, after the UE 6 performed the handover, the RAN node 2 can receive, from the RAN node 3, the information contained in the measurement report and measured by the UE 6. In other words, the RAN node 2 can receive the information contained in the measurement report and obtained by the UE 6 from the UE 6 via the RAN node 3. Therefore, according to the RAN nodes 2 and 3, and the UE 6, the AI-capable RAN node 2 contributes to the transmission/reception of information to/from at least the RAN node 3.

### (Fourth Example Embodiment)

Next, a fourth example embodiment will be described. A communication system according to the fourth example embodiment is similar to that in the third example embodiment. The configuration of each of the RAN nodes 2 to 4 and the UE 6 is similar to that described in the third example embodiment with reference to Fig. 5. Note that, in this example embodiment, it is assumed that the RAN nodes 2 to 4 have already established an inter-node interface(s) among them. Further, although the UE 6 is supposed to move from the cell 5-2 to the cell 5-1 in Fig. 5, the UE 6 may be a UE that has already been present in the cell 5-1 from the past.

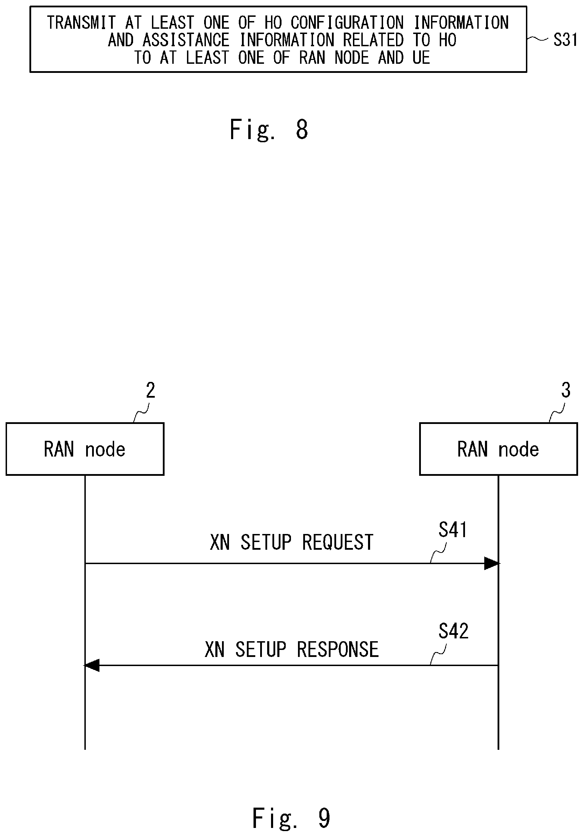

An example of operations performed by the communication system according to the fourth example embodiment will be described with reference to Fig. 8. Fig. 8 shows an example of operations performed by the communication system according to the fourth example embodiment. In the fourth example embodiment, a procedure in which the RAN node 2 transmits, for example, information obtained by using an AI model to at least one of the RAN nodes 3 and 4, and the UE 6 is provided. In this example embodiment, for example, a procedure in which an AI model outputs HO configuration information and assistance information related to a handover, and the RAN node 2 transmits the HO configuration information and the assistance information is described.

As shown in Fig. 8, in a step S31, the RAN node 2 transmits at least one of HO configuration information and assistance information related to a handover to at least one of the RAN nodes 3 and 4, and the UE 6.

As described above, the RAN node 2 transmits the HO configuration information and the assistance information to the RAN nodes 3 and 4, and the UE 6. Therefore, according to the RAN nodes 2 to 4 and the UE 6, the AI-capable RAN node 2 contributes to the transmission/reception of information to/from the RAN nodes 3 and 4, and the UE 6.

### (Fifth Example Embodiment)

In a fifth example embodiment, a procedure in which an RAN node including an AI function acquires cell configuration information from another RAN node is provided. Further, the fifth example embodiment provides a specific example of the first example embodiment. A RAN node including an AI function may input cell configuration information to an AI model and thereby machine-trains the AI model. Further, the RAN node including the AI function may input cell configuration information to the AI model, and the AI model may output information related to the control of communication in the RAN. An example of the configuration of the communication system according to this example embodiment is similar to that in the first example embodiment shown in Fig. 1. An example of the configuration of each of the RAN nodes 2 and 3 is similar to that in the first example embodiment shown in Fig. 2.

A procedure in which the RAN node 2 acquires cell configuration information from the RAN node 3 will be described hereinafter. Firstly, a first example of operations (hereinafter also referred to as a first operation example) in the fifth example embodiment will be described with reference to Fig. 9. Fig. 9 shows a procedure for acquiring cell configuration information. The first operation example is an example of operations in which the RAN nodes 2 and 3 use a procedure for establishing an inter-node interface described in Non-patent Literature 2 (TS38.423). Note that although it is assumed that the inter-node interface is an Xn interface in Fig. 9, other interfaces, such as an X2 interface, between RAN nodes may be used.

As shown in Fig. 9, in a step S41, the RAN node 2 transmits an XN SETUP REQUEST message to the RAN node 3. The XN SETUP REQUEST message is a message for requesting establishment of an inter-node interface between the RAN nodes 2 and 3. The XN SETUP REQUEST message contains a List of Served Cells NR IE. The List of Served Cells NR IE contains a complete list of cells served by the RAN node 2. The RAN node 2 sets the list of cells provided by the RAN node 2 in the List of Served Cells NR IE.

In this example embodiment, the XN SETUP procedure is used not only to establish an inter-node interface, but also to establish a management relation between the RAN node 2, which is an RAN node including an AI function (i.e., an AI-enhanced RAN node), and the RAN node 3. The XN SETUP REQUEST message contains an IE that indicates that the RAN node 2 is an RAN node including an AI function. This IE may be, for example, an AI-enhanced gNB indicator. The AI-enhanced gNB indicator IE corresponds to the first information in the first example embodiment. In other words, the RAN node 2 transmits, to the RAN node 3, an establishment request message for an interface with the RAN node 3, containing first information indicating that the RAN node 2 is an RAN node including an AI function. Note that the AI-enhanced gNB indicator IE may be information for proposing to be managed by an AI-enhanced RAN node. In other words, the RAN node 2 may implicitly indicate that RAN node 2 is a RAN node including an AI function.

The AI-enhanced gNB indicator IE may be, for example, of a BOOLEAN type, and a "true" or a "false" may be set therein. When the "true" is set in the AI-enhanced gNB indicator IE, the AI-enhanced gNB indicator IE may indicate that RAN node 2 is an AI-enhanced RAN node. When the "false" is set in the AI-enhanced gNB indicator IE, the AI-enhanced gNB indicator IE may indicate that RAN node 2 is not an AI-enhanced RAN node. In this example embodiment, since the RAN node 2 is an RAN node including an AI function, the "true" is set in the AI-enhanced gNB indicator IE.

Note that although the XN SETUP REQUEST message is used in the step S41, an inter-node interface establishment request message between the RAN nodes 2 and 3, different from the XN SETUP REQUEST message may be used. The inter-node interface establishment request message may be expressed as an Interface setup request message. The IE included in the inter-node interface establishment request message may be a list of cells served by the RAN node 2, and its name is not limited to the List of Served Cells NR IE. Further, in the step S41, a message for establishing a management relationship between the RAN node 2, which is a RAN node including an AI function (an AI-enhanced RAN node), and the RAN node 3, different from the XN SETUP REQUEST message may be used.

In a step S42, the RAN node 3 transmits an XN SETUP RESPONSE message to the RAN node 2. The XN SETUP RESPONSE message is a response message indicating the establishment of the inter-node interface between the RAN nodes 2 and 3. The XN SETUP RESPONSE message contains a List of Served Cells NR IE. The List of Served Cells NR IE contains a complete list of cells served by the RAN node 3. The RAN node 3 sets a list of cells served by the RAN node 3 in the List of Served Cells NR IE.

The list of cells served by RAN node 3 may be in the form of the below-shown Cell configuration information. The Cell configuration information may contain a RAN node ID for identifying the RAN node 3, and a Cell ID(s) for identifying a cell(s) served by the RAN node 3, Further, when the RAN node 3 manages a DU(s), the Cell configuration information may contain a DU ID(s) for identifying the DU(s).

**[Table 3]**

| | | |
|---|---|---|
| Cell configuration information: | | |
| • RAN node ID | | |
| | ➢ (Conditional) DU ID 1..A | |
| | | ✧ Cell ID L.B |

The XN SETUP RESPONSE message contains an IE that indicates whether or not the RAN node 3 accepts to be managed by the RAN node 2, which is the AI-enhanced RAN node (i.e., contains Information element indicating whether RAN node accepts to be managed by AI-enhanced RAN node). This IE may be, for example, a Management relationship confirmed IE. The Management relationship confirmed IE may be referred to as second information. In other words, the RAN node 3 transmits, to the RAN node 2, an establishment response message for an interface with the RAN node 2, containing second information indicating whether or not the RAN node 3 is allowed to be managed by the RAN node 2 including the AI function.

The Management relationship confirmed IE may be, for example, of a BOOLEAN type, and a "true" or a "false" may be set therein. When the "true" is set in the Management relationship confirmed IE, the Management relationship confirmed IE may indicate that RAN node 3 accepts to be managed by RAN node 2, which is an AI-enhanced RAN node. When the "true" is set in the Management relationship confirmed IE, the RAN nodes 2 and 3 may perform a procedure described in at least one of the example embodiments including this example embodiment. Further, on the other hand, when the "false" is set in the Management relationship confirmed IE, the Management relationship confirmed IE may indicate that the RAN node 3 does not accept to be managed by the RAN node 2, which is the AI-enhanced RAN node. When the "false" is set in the Management relationship confirmed IE, the RAN nodes 2 and 3 may not perform any procedure described in at least one of the example embodiments including this example embodiment.

Note that when the AI-enhanced gNB indicator IE is not contained in the XN SETUP REQUEST message transmitted from the RAN node 2, the RAN node 3 may consider that the RAN node 2 is not a RAN node including an AI function. In this case, the RAN node 3 may not incorporate the Management relationship confirmed IE into the XN SETUP RESPONSE message.

Although the XN SETUP RESPONSE message is used in the step S42, a response message corresponding to that in the step S41 may be used. In other words, an inter-node interface establishment response message different from the XN SETUP RESPONSE message may be used in the step S42. The inter-node interface establishment response message may be expressed as an Interface setup response message. The IE contained in the inter-node interface establishment response message may be a list of cells served by the RAN node 3, and its name is not limited to the List of Served Cells NR IE. Further, in the step S42, a message for establishing a management relationship between the RAN node 2, which is a RAN node including an AI function (an AI-enhanced RAN node), and the RAN node 3, different from the XN SETUP RESPONSE message may be used.

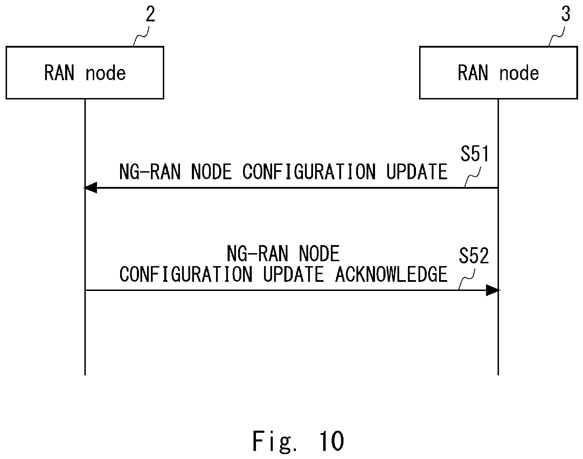

A second operation example in the fifth example embodiment will be described with reference to Fig. 10. The RAN node 2 acquires cell configuration information from the RAN node 3 by performing the second operation example. Fig. 10 shows a procedure for acquiring cell configuration information. The RAN node 2 performs the second operation example by using a procedure described in Non-patent Literature 2 (TS38.423). The second operation example is performed every time a cell configuration provided by the RAN nodes 2 and 3 is changed. Note that the RAN nodes 2 and 3 perform the first and second operation examples.

As shown in Fig. 10, in a step S51, the RAN node 3 transmits an NG-RAN NODE CONFIGURATION UPDATE message to the RAN node 2. The NG-RAN NODE CONFIGURATION UPDATE message contains a Served Cells To Update NR IE. The Served Cells To Update NR IE contains updated cell configuration information provided by the RAN node 3. The RAN node 2 receives the NG-RAN NODE CONFIGURATION UPDATE message from the RAN node 3 and acquires the updated cell configuration information contained in the Served Cells To Update NR IE.

In a step S52, when the RAN node 2 has successfully received the NG-RAN NODE CONFIGURATION UPDATE message, it transmits an NG-RAN NODE CONFIGURATION UPDATE ACKNOWLEDGE message to the RAN node 3.

As described above, the RAN nodes 2 and 3 can establish an inter-node interface therebetween, and establish a management relation between the RAN node 2, which is the AI-enhanced RAN node, and the RAN node 3. Further, the RAN node 2 can receive cell configuration information from the RAN node 3 managed by the RAN node 2. Therefore, according to the RAN nodes 2 and 3, the AI-capable RAN node 2 contributes to the transmission/reception of information to/from the RAN node 3. Further, the RAN node 2 can acquire the latest cell configuration information of the RAN node 3 managed by the RAN node 2 by performing the above-described procedure.

### (Sixth Example Embodiment)

In a sixth example embodiment, a procedure in which an RAN node including an AI function acquires cell load information from a RAN node managed by the RAN node including the AI function is provided. The RAN node including the AI function may input cell load information to an AI model and thereby machine-trains the AI model. Further, the RAN node including the AI function may input the cell load information to the AI model, and the AI model may output information related to the control of communication in the RAN. An example of the configuration of the communication system according to this example embodiment is similar to that in the first example embodiment shown in Fig. 1. An example of the configuration of each of the RAN nodes 2 and 3 is similar to that in the first example embodiment shown in Fig. 2. Note that it is assumed that the RAN nodes 2 and 3 have already established an inter-node interface therebetween, and the RAN node 3 accepts to be managed by the RAN node 2.

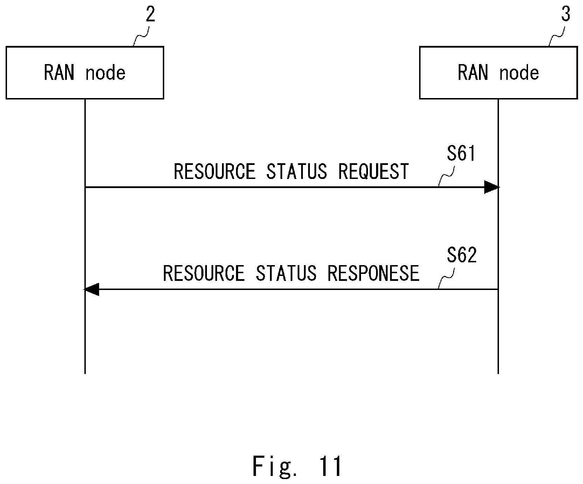

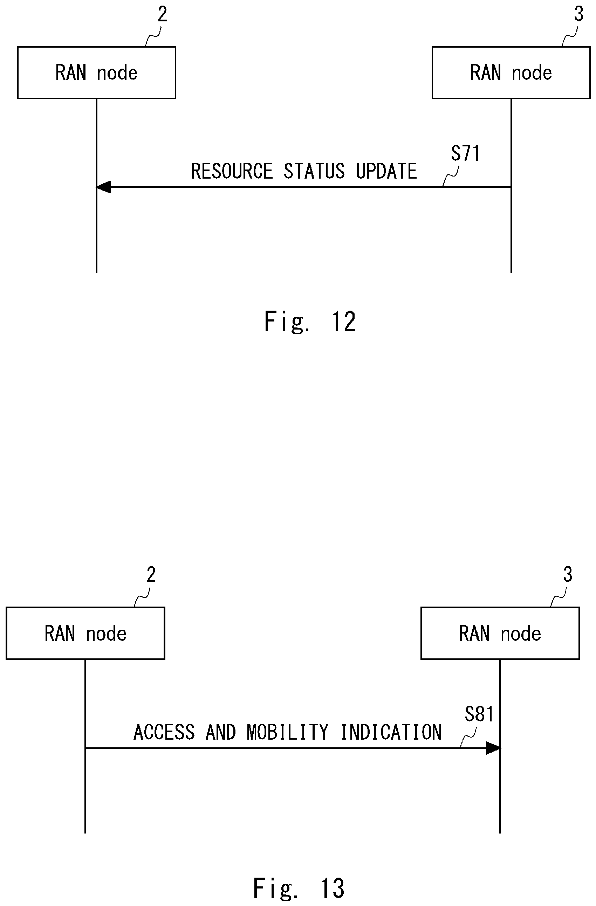

Firstly, a procedure in which the RAN node 2, which is an AI-enhanced RAN node, acquires cell load information from the RAN node 3 will be described with reference to Figs. 11 and 12. Figs. 11 and 12 show a procedure for acquiring cell load information. The RAN nodes 2 and 3 acquire cell load information by using a Resource Status Reporting procedure described in Non-patent Literature 2 (TS38.423).

As shown in Fig. 11, in a step S61, the RAN node 2 transmits a RESOURCE STATUS REQUEST message to the RAN node 3. The RAN node 2 transmits the RESOURCE STATUS REQUEST message to the RAN node 3 in order to request the RAN node 3 to report load measurements. The RAN node 2 may request the RAN node 3 to measure a cell capacity. The RAN node 2 may request the RAN node 3 to measure a load. The load may include DL GBR PRB (Downlink Guaranteed Bit Rate Physical Resource Block) usage, UL (uplink) GBR PRB usage, DL non-GBR PRB usage, and UL non-GBR PRB usage. The RAN node 2 may request the RAN node 3 to measure a capacity of a TNL (Transport Network Layer).

In a step S62, the RAN node 3 transmits a RESOURCE STATUS RESPONSE message to the RAN node 2. The RAN node 3 starts measurement requested by the RESOURCE STATUS REQUEST message in response to the reception of the RESOURCE STATUS REQUEST message. When the RAN node 3 has normally started the requested measurement, it transmits a RESOURCE STATUS RESPONSE message to the RAN node 2 in order to indicate that the RAN node 3 has normally started the requested measurement.

As shown in Fig. 12, in a step S71, the RAN node 3 transmits a RESOURCE STATUS UPDATE message to the RAN node 2. The step S71 is performed after the steps S61 and S62 shown in Fig. 11 are performed. The RAN node 3 reports a result of the measurement requested by the RESOURCE STATUS REQUEST message. The RAN node 3 transmits a RESOURCE STATUS UPDATE message containing a result of measurement of at least one of a cell capacity, a load, and a TNL capacity to the RAN node 2. The load may include DL GBR PRB usage, UL GBR PRB usage, DL non-GBR PRB usage, and UL non-GBR PRB usage.

As described above, the RAN node 2 can receive cell load information from the RAN node 3. Therefore, according to the RAN nodes 2 and 3, the AI-capable RAN node 2 contributes to the transmission/reception of information to/from the RAN node 3. Further, the RAN node 2 can obtain the latest cell load information of the RAN node 3 managed by the RAN node 2 by performing the above-described procedure.

### (Seventh Example Embodiment)

In a seventh example embodiment, a procedure in which an RAN node including an AI function acquires HO configuration information from another RAN node is provided. Further, the seventh example embodiment provides a specific example of the second example embodiment. The HO configuration information is information containing setting values of HO parameter set in the RAN node. The HO parameter defines when a handover is triggered, or when measurement of a handover (HO measurement) is triggered. Further, the HO parameter defines which cells are considered to be candidate cells for the handover. The HO parameter directly affects the handover performance. A RAN node including an AI function may input HO configuration information to an AI model and thereby machine-trains the AI model. Further, the RAN node including the AI function may input HO configuration information to the AI model, and the AI model may output information related to the control of communication in the RAN. Therefore, in this example embodiment, a procedure in which an RAN node including an AI function acquires HO configuration information from another RAN node is provided.

An example of the configuration of the communication system according to this example embodiment is similar to that in the first example embodiment shown in Fig. 1. An example of the configuration of each of the RAN nodes 2 and 3 is similar to that in the first example embodiment shown in Fig. 2. Note that it is assumed that the RAN nodes 2 and 3 have already established an inter-node interface therebetween, and the RAN node 3 accepts to be managed by the RAN node 2.

A procedure in which the RAN node 2, which is an AI-enhanced RAN node, acquires HO configuration information from the RAN node 3 will be described hereinafter. Firstly, a first operation example in the seventh example embodiment will be described. The RAN nodes 2 and 3 perform the first operation example by using a Resource Status Reporting procedure described in Non-patent Literature 2 (TS38.423). Since the first operation example is performed by using the messages shown in Figs. 11 and 12, it will be described with reference to Figs. 11 and 12. Note that descriptions about parts of the first operation example that are the same as those shown in Figs. 11 and 12 are omitted as appropriate.

In a step S61, the RAN node 2 transmits a RESOURCE STATUS REQUEST message to the RAN node 3. The RESOURCE STATUS REQUEST message corresponds to the first message in the second example embodiment. The RAN node 2 requests the RAN node 3 to transmit HO configuration information set in the RAN node 3 to the RAN node 2 by using the RESOURCE STATUS REQUEST message. The RESOURCE STATUS REQUEST message contains a Report Characteristics IE. The Report Characteristics IE may be, for example, of a 32-bit BITSTRING type, and the sixth bit of the Report Characteristics IE may be set as a bit for requesting the transmission of HO configuration information. In other words, regarding the Report Characteristics IE, its sixth bit may be defined as "Sixth Bit = HO parameters". For example, the RAN node 2 may request the RAN node 3 to transmit HO configuration information set in the RAN node 3 to the RAN node 2 by setting a value "1" in the sixth bit of the Report Characteristics IE. Note that any of the other bits of the Report Characteristics IE may be set as a bit for requesting the transmission of HO configuration information.

When the value "1" is set in the sixth bit of the Report Characteristics IE, the RAN node 3 may recognize that the RAN node 2 is requesting the transmission of HO configuration information. Note that when the value "1" is set in the sixth bit of the Report Characteristics IE, the RAN node 3 may ignore the bits other than the sixth bit.

In a step S62, when the RAN node 3 has successfully received the RESOURCE STATUS REQUEST message, it transmits a RESOURCE STATUS RESPONSE message to the RAN node 2.

In a step S71, the RAN node 3 transmits a RESOURCE STATUS UPDATE message containing HO configuration information to the RAN node 2. The step S71 is performed after the steps S61 and S62 shown in Fig. 11 are performed. The RESOURCE STATUS UPDATE message corresponds to the second message in the second example embodiment. The RESOURCE STATUS UPDATE message contains an IE in which HO configuration information is set. The RESOURCE STATUS UPDATE message may contain HO configuration information for each DU. The RESOURCE STATUS UPDATE message may contain HO configuration information for each cell. In other words, the HO configuration information may be information on a cell-by-cell basis, and the RESOURCE STATUS UPDATE message may contain the same number of pieces of HO configuration information as the number of cells served by the RAN node 3. The IE in which HO configuration information is set may be referred to as an HO parameters IE. The HO configuration information contains a setting value(s) of an HO parameter(s) related to an HO event(s).

The HO parameter may be parameters related to Events A1 to A6 defined in Non-patent Literature 3 (TS38.331). The Events A1 to A6 may be used for different types of intra-system handovers (intra-system HOs). It is considered that since the HO parameter related to each HO event can be one or more parameters, the HO configuration information contain an HO parameter set related to each HO event. Further, the HO configuration information contains an HO cause associated to each HO event. The HO cause associated with each HO event may indicate for which purposes of HOs the HO parameter sets associated with that HO event are used. As the HO cause, HO causes defined in Non-patent Literature 2 may be used. Examples of the HO cause include Handover Desirable for Radio Reasons, Reduce Load in Serving Cell, and Resource Optimisation Handover.

The RAN node 3 sets HO configuration information containing setting values of parameters of the Events A1 to A6 and HO causes in the HO parameters IE. The RAN node 3 transmits a RESOURCE STATUS UPDATE message containing the HO parameters IE to the RAN node 2. Note that the HO configuration information may contain setting values of parameters related to some of the Events A1 to A6, and may contain setting values of parameters related to events different from the Events A1 to A6.

Note that examples of parameters (parameter sets) for the Events A1 to A6 are shown below. The parameter set for the Event A1 includes a1-Threshold, reportOnLeave, hysteresis, and timeToTrigger. The parameter set for the Event A2 includes a2-Threshold, reportOnLeave, hysteresis, and timeToTrigger. The parameter set for the Event A3 includes a3-Offset, reportOnLeave, hysteresis, timeToTrigger, and useWhiteCellList. The parameter set for the Event A4 includes a4-Threshold, reportOnLeave, hysteresis, timeToTrigger, and useWhiteCellList. The parameter set for the Event A5 includes a5-Threshold1, a5-Threshold2, reportOnLeave, hysteresis, timeToTrigger, and useWhiteCellList. The parameter set for the Event A6 includes a6-Offset, reportOnLeave, hysteresis, timeToTrigger, and useWhiteCellList.

Note that although parameters having the same names are included in a plurality of events, their setting values are unique to the respective events. Further, the HO parameters IE may also contain information in which a setting value of each of the above-described parameters is set. Alternatively, the HO parameters IE may contain one parameter having an OCTET_STRING type, which refers to the definitions of HO parameters shown in Non-patent Literature 3.

Next, an example of a combination of an event name, an HO parameter, and an HO cause will be described by using two different examples of cells. For example, it is assumed that the first cell uses the Event A2 for an HO for the reason of coverage and uses the Event A3 for an HO for the reason of load balancing. In such a case, the RAN node 2 acquires HO configuration information containing setting values of the below-shown HO parameters and HO causes from the RAN node serving the first cell. Note that although only relevant events are described hereinafter, all the events may be included.
∘ Combination for cell 1 (for a first cell)
   > Event A2 (serving cell becomes worse than threshold)
      - HO parameters: a2-Threshold, reportOnLeave, hysteresis, timeToTrigger
      - HO cause: "Handover Desirable for Radio Reasons"
   > Event A3 (neighbour cell becomes offset better than SpCell)
      - HO parameters: a3-Offset, reportOnLeave, hysteresis, timeToTrigger, useWhiteCellList
      - HO cause: "Reduce Load in Serving Cell"

Further, it is assumed that, for example, the second cell uses the Event A5 for an HO for the reason of coverage and uses the Event A6 for an HO for the reason of load balancing. In such a case, the RAN node 2 acquires HO configuration information containing setting values of the below-shown HO parameters and HO causes from the RAN node serving the second cell. Note that although only relevant events are described hereinafter, all the events may be included.
∘ Combination for cell 2 (for a second cell):
   > Event A5 (SpCell becomes worse than threshold1 and neighbor becomes better than threshold2)
      - HO parameters: a5-Threshold1, a5-Threshold2, reportOnLeave, hysteresis, timeToTrigger, useWhiteCellList
      - HO cause: "Handover Desirable for Radio Reasons"
   > Event A6 (neighbor cell becomes offset better than SCell)
      - HO parameters: a6-Offset, reportOnLeave, hysteresis, timeToTrigger, useWhiteCellList
      - HO cause: "Reduce Load in Serving Cell"

Note that the HO configuration information may have the below-shown structure. Specifically, the HO configuration information may be information on a cell-by-cell basis, and the HO configuration information for each cell may contain one or more HO parameter sets. Each HO parameter set may contain a setting value of each HO parameter contained in the HO parameter set and information indicating for which purpose of an HO each parameter set is used.

**[Table 4]**

| | | |
|---|---|---|
| ✧ Cell ID # 1 | | |
| | • HO parameter set ID 1 | |
| | | ➢ HO parameters specific to this set: a2-Threshold, reportOnLeave, hysteresis, timeToTrigger |
| | | ➢ Information how this set is used for HO purposes: "Handover Desirable for Radio Reasons" |
| | • HO parameter set ID 2 | |
| | | ➢ HO parameters specific to this set: as-Offset, reportOnLeave, hysteresis, timeToTrigger, useWhiteCellList |
| | | ➢ Information how this set is used for HO purposes: "Reduce Load in Serving Cell" |

Next, a second operation example according to the seventh example embodiment will be described. The RAN nodes 2 and 3 perform the second operation example by using an Access and Mobility procedure described in Non-patent Literature 2 (TS38.423). A part of the procedure of the second operation example may be the same as that in the first operation example described above with reference to Fig. 11, or may be similar to that in the first operation example. Therefore, the second operation example will be described with reference to Fig. 13 as well as to Fig. 11. Fig. 13 shows a procedure for acquiring HO configuration information. Note that the RAN nodes 2 and 3 may perform the second operation example instead of performing the first operation example, or may perform the second operation example in addition to performing the first operation example.

As shown in Fig. 11, in a step S61, the RAN node 2 transmits a RESOURCE STATUS REQUEST message to the RAN node 3. The RAN node 2 requests the RAN node 3 to transmit HO configuration information set in the RAN node 3 to the RAN node 2 by using the RESOURCE STATUS REQUEST message. The RESOURCE STATUS REQUEST message contains a Report Characteristics IE. Similarly to the first operation example, the Report Characteristics IE may be, for example, of a 32-bit BITSTRING type, and the sixth bit of the Report Characteristics IE may be set as a bit for requesting the transmission of HO configuration information. For example, the RAN node 2 may request the RAN node 3 to transmit HO configuration information set in the RAN node 3 to the RAN node 2 by setting a value "1" in the sixth bit of the Report Characteristics IE.

When the value "1" is set in the sixth bit of the Report Characteristics IE, the RAN node 3 may recognize that the RAN node 2 is requesting the transmission of HO configuration information. Note that when the value "1" is set in the sixth bit of the Report Characteristics IE, the RAN node 3 may ignore the bits other than the sixth bit.

In a step S62, when the RAN node 3 has successfully received the RESOURCE STATUS REQUEST message, it transmits a RESOURCE STATUS RESPONSE message to the RAN node 2. Note that, in the second operation example, messages different from the RESOURCE STATUS REQUEST message and the RESOURCE STATUS RESPONSE message may be used. In the second operation example, for example, an ACCESS AND MOBILITY REQUEST message and an ACCESS AND MOBILITY RESPONSE messages may be used.

Next, as shown in Fig. 13, in a step S81, the RAN node 3 transmits an ACCESS AND MOBILITY INDICATION message to the RAN node 2. The step S81 is performed after the step S62 shown in Fig. 11. The ACCESS AND MOBILITY INDICATION message contains an IE in which HO configuration information is set. This IE may be referred to as an HO parameters IE. The information set in the HO parameters IE may be similar to that in the first operation example. The HO configuration information contains a setting value(s) of an HO parameter(s) related to an HO event(s). The HO configuration information may be information on a cell-by-cell basis. The HO parameters IE may contain the same number of pieces of HO configuration information as the number of cells served by the RAN node 3. Further, the HO configuration information contains an HO cause associated to each HO event. The HO cause may indicate for which purpose of an HO the HO parameters related to each HO event are used. The parameters related to the HO events may be parameters related to the Events A1 to A6 defined in Non-patent Literature 3 (TS38.331).

The RAN node 3 sets HO configuration information containing setting values of parameters of the Events A1 to A6 and HO causes in the HO parameters IE. The RAN node 3 transmits an ACCESS AND MOBILITY INDICATION message containing the HO parameters IE to the RAN node 2.

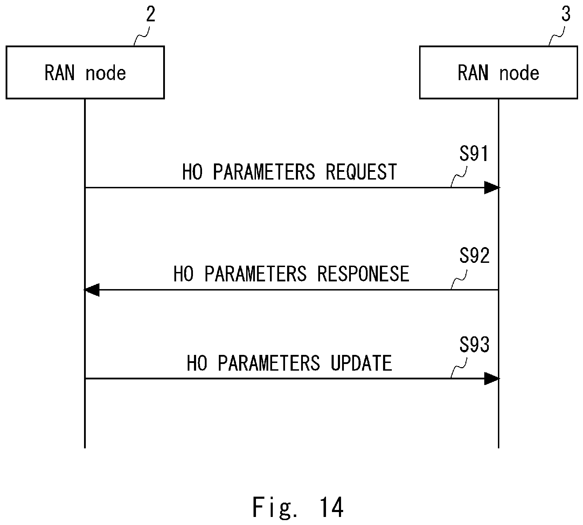

Next, a third operation example in the seventh example embodiment will be described with reference to Fig. 14. Fig. 14 shows a procedure for acquiring HO configuration information. Note that the RAN nodes 2 and 3 may perform the third operation example instead of performing the first and second operation examples, or may perform the third operation example in addition to performing at least one of the first and second operation examples.

As shown in Fig. 14, in a step S91, the RAN node 2 transmits, to the RAN node 3, an HO PARAMETERS REQUEST message requesting the RAN node 3 to transmit HO configuration information to the RAN node 2.

In a step S92, the RAN node 3 transmits an HO PARAMETERS RESPONSE message containing the HO configuration information to the RAN node 2. The HO PARAMETERS RESPONSE message may contain the HO parameters IE described in the first and second operation examples. The information set in the HO parameter IE is similar to those in the first and second operation examples, and therefore the description thereof is omitted. The HO parameters IE may contain the same number of pieces of HO configuration information as the number of cells served by the RAN node 3.

In the step S93, when an HO parameter is updated, the RAN node 3 transmits, in order to transmit the updated HO parameter to the RAN node 2, an HO PARAMETERS UPDATE message containing the updated HO parameter to the RAN node 2. The HO PARAMETERS UPDATE message may contain the HO parameters IE described in the first and second operation examples. The information set in the HO parameter IE is similar to those in the first and second operation examples, and therefore the description thereof is omitted. Note that the HO parameters IE may contain the same number of pieces of HO configuration information as the number of cells served by the RAN node 3.

Note that when the management relationship described in the fifth example embodiment is established between the RAN node 2, which is the AI-enhanced RAN node, and the RAN node 3, the steps S91 and S92 may be started depending on the implementation. In this case, the RAN nodes 2 and 3 may not perform the step S91, and the RAN node 3 may transmit the HO configuration information to the RAN node 2 by using a procedure different from the steps S91 and S92.

Further, when the HO configuration information is updated in the RAN node 3, the RAN node 3 may start the step S92 and transmit the updated HO configuration information to the RAN node 2. Alternatively, when the HO configuration information is updated, the RAN node 3 may transmit the updated HO configuration information and the initial HO configuration information indicating the HO configuration information before the update to the RAN node 2. In this case, the RAN nodes 2 and 3 may not perform the step S91, and the RAN node 3 may transmit the HO configuration information to the RAN node 2 by using a procedure different from the steps S91 and S92. Note that steps S92 and S93 may be performed when the HO parameters of all the UEs present in each cell served by the RAN node 3 are the same as each other.

Note that the HO configuration information may have the below-shown structure. Specifically, the HO configuration information may be information on a DU-by-DU basis. Further, the HO configuration information may be information on a cell-by-cell basis. The HO configuration information may contain the same number of pieces of HO configuration information as the number of cells and the number of DUs. The HO configuration information may contain one or more HO parameter sets for each cell. Each HO parameter set may include a setting value of each parameter contained in an HO parameter set, and contain information indicating for which purpose of an HO that parameter set is used.

**[Table 5]**

| | | | | |
|---|---|---|---|---|
| HO configuration information: | | | | |
| • NG-RAN node ID | | | | |
| | ➢ (Conditional) DU ID 1..A | | | |
| | | ✧ Cell ID 1..B | | |
| | | | • HO parameter set ID 1..C | |
| | | | | ➢ HO parameters specific to this set |
| | | | | ➢ Information how this set is used for HO purposes |

As described above, the RAN node 2 can receive HO configuration information from the RAN node 3. Therefore, according to the RAN nodes 2 and 3, the AI-capable RAN node 2 contributes to the transmission/reception of information to/from the RAN node 3. Further, the RAN node 2 can acquire HO configuration information set in the RAN node 3 by performing the above-described procedure, and thereby can optimize the HO configuration information by using the AI function included in the RAN node 2.

### (Eighth Example Embodiment)

In an eighth example embodiment, a procedure in which an RAN node including an AI function acquires, from another RAN node, information about quality of a cell that is measured by a UE (i.e., a cell quality information that is obtained by a UE) after the UE has performed a handover, and an indicator indicating whether or not the handover is a normal HO is provided. Further, the eighth example embodiment provides a specific example of the third example embodiment.

An example of the configuration of the communication system according to this example embodiment is similar to that in the third example embodiment shown in Fig. 5. An example of the configuration of each of the RAN nodes 2 to 4 is similar to that in the first example embodiment shown in Fig. 2. An example of the configuration of the UE 6 is similar to that in the third example embodiment shown in Fig. 6. Note that it is assumed that the RAN nodes 2 and 3 have already established an inter-node interface therebetween, and the RAN node 3 accepts to be managed by the RAN node 2.

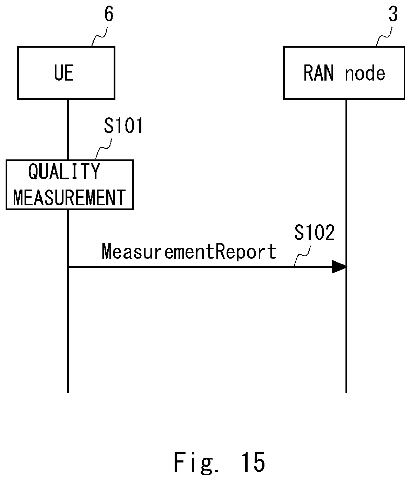

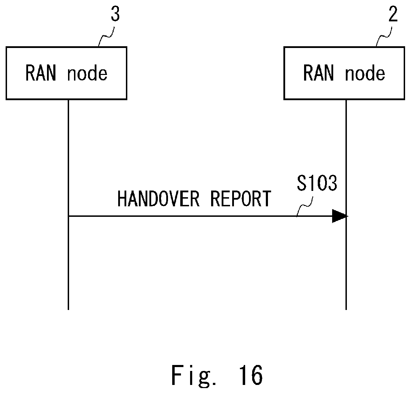

A procedure in which the RAN node 2 receives information related to an HO performed by a UE will be described hereinafter. Firstly, a first operation example in the eighth example embodiment will be described with reference to Figs. 15 and 16. Figs. 15 and 16 show procedures related to the transmission of information related to an HO performed by a UE.

In a step S101 shown in Fig. 15, the UE 6 performs a handover from the cell 5-2 served by the RAN node 4 to the cell 5-1 served by the RAN node 3, and measures the quality of the cell (i.e., obtains cell quality information) after the handover to the cell 5-1. The quality information may be cell reference signal measurement information about the measurement of a cell reference signal. In other words, the UE 6 acquires cell reference signal measurement information by measuring a reference signal. Note that the cell 5-2 is a source cell and the cell 5-1 is a target cell. The RAN node 4 may be referred to as a source RAN node, and the RAN node 3 may be referred to as a target RAN node. The cell 5-1 is a current serving cell (i.e., a serving cell at present moment) after the handover, and the cell 5-2 may be referred to as a last serving cell.

The UE 6 measures the quality (i.e., obtains quality information) of the cell 5-2, which is the last serving cell, set for the UE 6 by RRC signaling, and measures that of a cell(s) adjacent to the cell 5-2 (hereinafter also referred to as a neighbor cell(s)). In other words, the UE 6 measures (i.e., obtains) cell quality information of the cell 5-2, which is the source cell of the handover performed by the UE 6, and that of a cell(s) adjacent to the cell 5-2. The neighbor cell may be only the cell 5-1, which is the target cell of the handover, or may include some or all of the cells adjacent to the cell 5-2. The quality information may contain at least one of RSRP (Reference Signal Received Power), RSRQ (Reference Signal Received Quality), and an SINR (Signal to Interference plus Noise Ratio).

In a step S102, the UE 6 transmits a Measurement Report to the RAN node 3 serving the cell 5-1 via RRC signaling. Note that the measurement report that the UE 6 transmits after the handover thereof may also be referred to as a UE HO report. Note that the UE 6 may transmit the cell quality information (the cell reference signal measurement information) to the RAN node 3 by using one or more measurement reports. Alternatively, the UE 6 may transmit the cell quality information (the cell reference signal measurement information) to the RAN node 3 through a procedure different from that for the measurement report.

The measurement report may contain an indicator indicating whether or not the handover of the UE 6 from the cell 5-2 to the cell 5-1 has been normally performed. This indicator may be, for example, a Normal/abnormal HO indicator. When the UE 6 can determine whether or not the handover from the cell 5-2 to the cell 5-1 has been normally performed, the UE 6 may incorporate the Normal/abnormal HO indicator into the measurement report.

The measurement report contains the information about quality of the cell measured by the UE 6 in the step S101. As described above, the cell quality information contains at least one of RSRP, RSRQ, and an SINR. When the measurement report may contain the Normal/abnormal HO indicator and the Normal/abnormal HO indicator indicates that the HO is an abnormal HO, the measurement report may contain RLF report information. The RLF report information may be an RLF report defined in Non-patent Literature 3 or an RLF report different from the RLF report defined in Non-patent Literature 3. Note that the UE 6 may transmit the RLF report information to the RAN node 3 through a procedure different from that for the measurement report containing the cell quality information (the cell reference signal measurement information).

The measurement report may contain HO configuration information that was used to trigger the handover performed by the UE 6. In other words, the measurement report may contain HO configuration information related to the cell 5-2 served by RAN node 4. The HO configuration information contained in the measurement report may contain information indicating an HO event used to trigger the handover performed by the UE 6, a setting value(s) of an HO parameter(s) corresponding to this HO event, and an HO cause corresponding to the HO event. The HO cause may indicate for which purposes of HOs the HO event is used. The information indicating the HO event may include the name of the HO event. The HO event may be one of the Events A1 to A6 shown in the seventh example embodiment. As the HO cause, an HO cause defined in Non-patent Literature 2 may be used. For example, the HO cause may include at least one of Handover Desirable for Radio Reasons, a Reduce Load in Serving Cell, and a Resource Optimisation Handover.

The UE 6 sets the cell quality information measured (i.e., obtained) in the step S101 and the HO configuration information in the measurement report. Further, in the case where the UE 6 can determine whether or not the handover from the cell 5-2 to the cell 5-1 has been normally performed, the UE 6 may set a Normal/abnormal HO indicator in the measurement report. Further, when the handover performed by the UE 6 is a handover that is performed because of an RLF and the UE 6 can determine that the handover is an abnormal HO, the UE 6 may also set RLF report information in the measurement report. The UE 6 transmits a measurement report that may contain the cell quality information, the HO configuration information, and the RLF report information.

The information contained in the measurement report (the information transmitted from the UE 6) may be, for example, those in the below-described format. The information contained in the measurement report may contain, though not limited thereto, a UE IE for identifying the UE 6 that has transmitted the measurement report, and a UE report ID for identifying the measurement report. The measurement report may contain a Normal/abnormal HO indicator indicating the above-described indicator, a source cell ID for identifying the source cell, and a target cell ID for identifying the target cell. The measurement report may contain Reference signal measurement information indicating results of measurement of reference signals of the source and target cells. The measurement report may contain an HO parameter set for the cell 5-2, which is the source cell, and the purpose of the HO for which this HO parameter set is used. Note that, in this example embodiment, the source cell ID is a cell ID for identifying the cell 5-2 served by the RAN node 4, and the target cell ID is a cell ID for identifying the cell 5-1 served by the RAN node 3.

**[Table 6]**

| | | | | |
|---|---|---|---|---|
| ➢ UEID | | | | |
| | ✧ UE report ID 1..I | | | |
| | | • Normal/abnormal HO indicator | | |
| | | • Source cell ID | | |
| | | | ➢ Reference signal measurement information | |
| | | • Target cell ID 1..L | | |
| | | | ➢ Reference signal measurement information | |
| | | • Source cell ID | | |
| | | | ➢ HO parameter set ID 1..J | |
| | | | | ✧ HO parameters specific to this set |
| | | | | ✧ Information how this set was used for HO purposes |
| | | • If abnormal, RLF report | | |

Note that when the UE 6 can determine whether or not the handover from the cell 5-2 to the cell 5-1 has been normally performed, the UE 6 may set the above-described indicator contained in the measurement report in the above-described message. Further, the UE 6 may transmit the cell quality information (the cell reference signal measurement information) to the RAN node 3 via one or more RRC signaling. Further, the RLF report information may be contained in one measurement report together with the cell quality information (the cell reference signal measurement information), and/or may be transmitted to the RAN node 3 in a procedure different from the procedure by which the measurement report containing the cell quality information (the cell reference signal measurement information) is transmitted.

In a step S103 shown in Fig. 16, the RAN node 3 transmits a HANDOVER REPORT message to the RAN node 2. The RAN node 3 may transmit a HANDOVER REPORT message containing information contained in the measurement report received from the UE 6 and the QoS information to the RAN node 2 by using a HANDOVER REPORT message specified in Non-patent Literature 2. The RAN node 3 transmits the HANDOVER REPORT message to the RAN node 2 in order to indicate the unintended event that has occurred during the handover. Further, the RAN node 3 transmits the HANDOVER REPORT message to the RAN node 2 in order to indicate that a normal HO has been performed. The unintended event may include a Too Late Handover, a Too Early Handover, and a Handover to wrong cell. The Handover to wrong cell may include an Intra-system Handover to wrong cell and Inter-system ping-pong. Note that the RAN node 3 may transmit the HANDOVER REPORT message to the RAN node 4 which serves the cell 5-2 which is the source cell.

The RAN node 3 may receive measurement reports from several UEs, and then may aggregate information contained in the measurement reports of these UEs and transmit an HO REPORT message containing the aggregated information to the RAN node 2. Alternatively, the RAN node 3 may transmit an HO REPORT message to the RAN node 2 every time it receives a measurement report from one UE.

The HO REPORT message contains a first IE indicating whether or not the handover is a handover based on an unintended event, a second IE in which information about quality of a cell measured by the UE is set, and a third IE in which RLF report information is set. The HO REPORT message contains a fourth IE in which HO configuration information related to the handover performed by the UE 6 is set, and a fifth IE in which QoS information is set.

The RAN node 3 may determine whether the handover performed by the UE 6 is a normal handover (a normal HO) or a handover based on an unintended event that has occurred during the HO, and set a result of the determination in the first IE. Note that information indicating which of a plurality of unintended events the handover is based on may be set in the first IE. Specifically, information indicating which of a Too Late Handover, a Too Early Handover, and a Handover to wrong cell the unintended event corresponds to may be set in the first IE. Further, when a Normal/abnormal HO indicator is contained in the measurement report transmitted from the UE 6, the RAN node 3 may set the first IE based on the Normal/abnormal HO indicator.

The RAN node 3 sets quality information contained in the measurement report received from the UE 6 in the second IE. The quality information is the quality information of the cell 5-2, which is the last serving cell configured for the UE 6 by RRC signaling, and that of a cell(s) adjacent to the cell 5-2. The quality information may contain at least one of RSRP, RSRQ, and an SINR. The RAN node 3 sets RLF report information contained in the measurement report received from the UE 6 in the third IE. The RAN node 3 sets HO configuration information contained in the measurement report received from the UE 6 in the fourth IE. The HO configuration information contained in the measurement report contains information indicating an HO event used to trigger the handover performed by the UE 6, a setting value(s) of an HO parameter(s) corresponding to this HO event, and an HO cause corresponding to the HO event. Note that the RAN node 3 may determine HO configuration information related to the handover performed by the UE 6 based on the measurement report received from the UE 6, and set the determined HO configuration information in the fourth IE.

The RAN node 3 sets QoS information in the fifth IE. The QoS information contains configuration information of a QoS flow and a QoS parameter(s). The RAN node 3 determines the QoS information of the UE 6, which has transmitted the measurement information, and sets the determined QoS information in the fifth IE. The QoS flow may be referred to as a UE QoS flow. The QoS flow and the QoS parameter may be used for a UE that requires special processing. The QoS flow and the QoS parameter may be used for a UE that requires, for example, a very high uplink data rate, such as professional video shooting during an event (e.g., an entertainment event). As shown in Non-patent Literature 4 (TS23.501), for example, a QoS parameter related to a downlink or uplink data transmission session such as a downlink or uplink application are set for the QoS flow. The QoS parameter may include a minimum data rate, a maximum delay, and the like that have to be complied with during the transmission of data related to the QoS flow. The RAN node 3 transmits a HANDOVER REPORT message containing the first to fifth IEs to the RAN node 2.

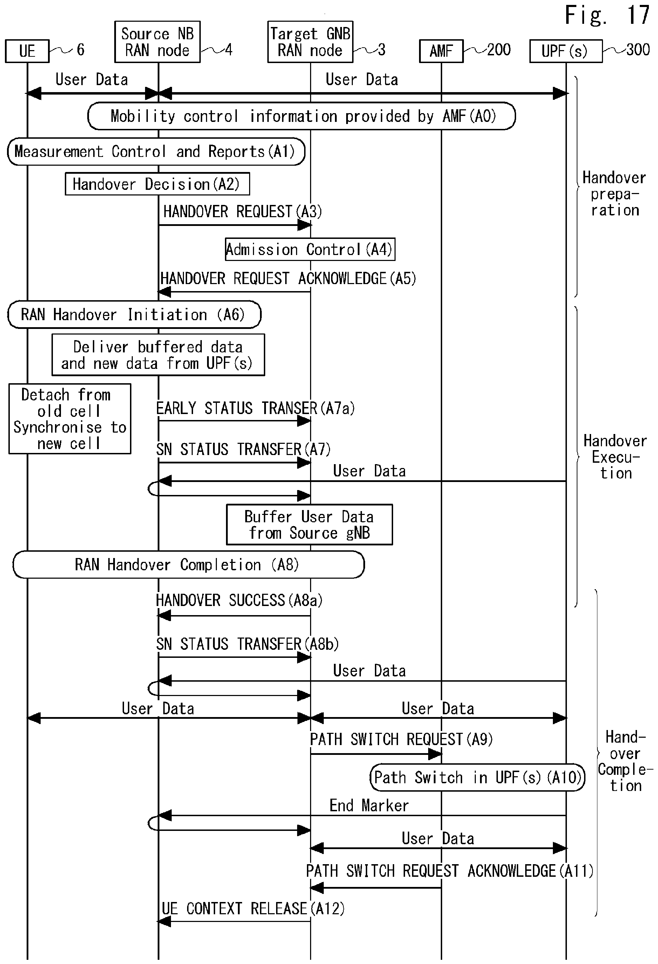

Next, a timing at which an HO REPORT message is transmitted will be described with reference to Fig. 17. Fig. 17 shows an example of an HO procedure. Fig. 17 is a sequence diagram showing an example of an HO procedure including an AMF (Access and Mobility Management Function) 200 and a UPF (User Plane Function) 300. As shown on the right side of the sequence diagram shown in Fig. 17, the RAN node 4, which is the source RAN node, the RAN node 3, which is the target RAN node, and the UE 6 performs a Handover preparation procedure. After that, the RAN node 4, the RAN node 3, and the UE 6 perform a Handover Execution procedure, and lastly performs a Handover Completion procedure.

The RAN node 3 may transmit a HANDOVER REPORT message to the RAN node 2 in the RAN Handover Completion in a step A8. Alternatively, the RAN node 3 may transmit the HANDOVER REPORT message to the RAN node 2 before transmitting the HANDOVER SUCCESS message to the RAN node 4 in a step A8a. Alternatively, the RAN node 3 may transmit the HANDOVER REPORT message to the RAN node 2 after transmitting the HANDOVER SUCCESS message to the RAN node 4 in the step A8a. Alternatively, the RAN node 3 may transmit the HANDOVER REPORT message to the RAN node 2 in response to the reception of an SN STATUS TRANSFER message from the RAN node 4 in a step A8b. Alternatively, the RAN node 3 may transmit the HANDOVER REPORT message to the RAN node 2 before transmitting a UE CONTEXT RELEASE message in a step A12. Alternatively, the RAN node 3 may transmit the HANDOVER REPORT message to the RAN node 2 after transmitting the UE CONTEXT RELEASE message in the step A12.

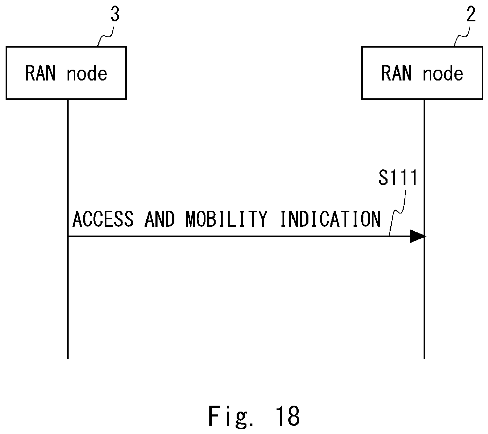

Next, a second operation example in the eighth example embodiment will be described with reference to Fig. 18. Fig. 18 shows a procedure related to the transmission of information related to an HO performed by the UE. In the second operation example, the message in the step S103 in the first operation example is replaced by an ACCESS AND MOBILITY INDICATION message. Note that the information contained in the ACCESS AND MOBILITY INDICATION message in the second operation example is similar to that contained in the HO REPORT message in the first operation example, and therefore the description thereof is omitted as appropriate. Further, the steps S101 and S102 are similar to those in the first operation example, and therefore the descriptions thereof are omitted. Note that the RAN nodes 2 and 3 may perform the second operation example instead of performing the first operation example, or may perform the second operation example in addition to performing the first operation example.

In a step S111, the RAN node 3 transmits an ACCESS AND MOBILITY INDICATION message to the RAN node 2. In the second operation example, the RAN node 3 transmits information related to the HO to the RAN node 2 by using the ACCESS AND MOBILITY INDICATION message specified in Non-patent Literature 2. The RAN node 3 may transmit the ACCESS AND MOBILITY INDICATION message to the RAN node 2 at a timing similar to that in the first operation example. The RAN node 3 transmits an ACCESS AND MOBILITY INDICATION message to the RAN node 2 in order to, in addition to indicating an unintended event that has occurred during the handover, indicate that a normal HO has been performed. The unintended event is similar to those in the first operation example. Note that the RAN node 3 may transmit the ACCESS AND MOBILITY INDICATION message to the RAN node 4 which is the source cell and serves the cell 5-2.

The RAN node 3 may receive measurement reports from several UEs, and then may aggregate information contained in the measurement reports of these UEs and transmit an ACCESS AND MOBILITY INDICATION message containing the aggregated information to the RAN node 2. Alternatively, the RAN node 3 may transmit an ACCESS AND MOBILITY INDICATION message to the RAN node 2 every time it receives a measurement report from one UE.

The ACCESS AND MOBILITY INDICATION message contains information similar to that in the first operation example. The ACCESS AND MOBILITY INDICATION message contains a first IE indicating whether or not the handover is a handover based on an unintended event, a second IE in which information about quality of a cell measured by the UE is set, and a third IE in which RLF report information is set. The ACCESS AND MOBILITY INDICATION message also contains a fourth IE in which HO configuration information related to the handover performed by the UE 6 is set, and a fifth IE in which QoS information is set.

The RAN node 3 may determine whether the handover performed by the UE 6 is a normal handover (a normal HO) or a handover based on an unintended event that has occurred during the HO, and set a result of the determination in the first IE. Note that similarly to the first operation example, when information indicating that the handover is a handover based on an unintended event is set in the first IE, the first IE may indicate which of a Too Late Handover, a Too Early Handover, and a Handover to wrong cell the unintended event corresponds to.

The RAN node 3 sets quality information contained in the measurement report received from the UE 6 in the second IE. The RAN node 3 may set RLF report information contained in the measurement report received from the UE 6 in the third IE. The RAN node 3 may set HO configuration information contained in the measurement report received from the UE 6 in the fourth IE. The RAN node 3 sets QoS information in the fifth IE. The RAN node 3 transmits an ACCESS AND MOBILITY INDICATION message containing the first to fifth IEs to the RAN node 2.

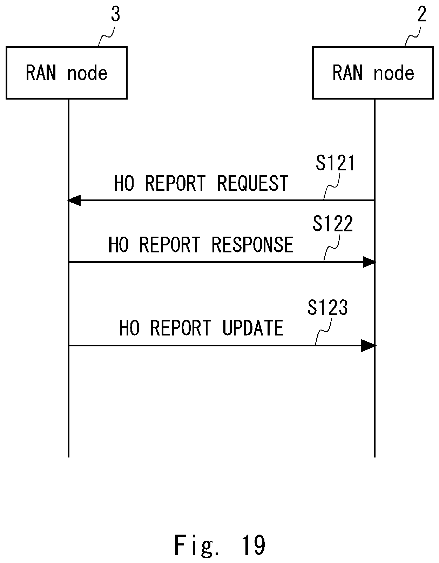

Next, a third operation example in the eighth example embodiment will be described with reference to Fig. 19. Fig. 19 shows a procedure related to the transmission of information related to an HO performed by the UE. The operation between the RAN nodes 2 and 3 of the third operation example differs from those in the first and second operation examples. Note that the steps S101 and S102 are similar to those in the first operation example, and therefore the descriptions thereof are omitted. Further, the RAN nodes 2 and 3 may perform the third operation example instead of performing the first and second operation examples, or may perform the third operation example in addition to performing at least one of the first and second operation examples.

In a step S121, the RAN node 2 transmits an HO REPORT REQUEST message requesting the transmission of the information related to the HO from the RAN node 3 to the RAN node 3. The step S121 is performed after the management relation described in the fifth example embodiment is established between the RAN node 2, which is the AI-enhanced RAN node, and the RAN node 3.

In a step S122, when the aforementioned management relation has already been established between the RAN nodes 2 and 3, the RAN node 3 accepts the request from the RAN node 2 and transmits an HO REPORT RESPONSE message to the RAN node 2.

In a step S123, when the RAN node 3 receives the measurement report from the UE 6, it becomes to be able to transmit the information related to the HO, so that the RAN node 3 transmits an HO REPORT UPDATE message to the RAN node 2. The RAN node 3 transmits the information related to the HO to the RAN node 2 by using the HO REPORT UPDATE message. The RAN node 3 may transmit the HO REPORT UPDATE message to the RAN node 2 at a timing similar to that in the first operation example. The information contained in the HO REPORT UPDATE message is similar to that contained in the HANDOVER REPORT message in the first operation example and that contained in the ACCESS AND MOBILITY INDICATION message in the second operation example. Therefore, descriptions similar to those of the HANDOVER REPORT message in the first operation example and the ACCESS AND MOBILITY INDICATION message in the second operation example are omitted as appropriate.

The RAN node 3 may receive measurement reports from several UEs, and then may aggregate information contained in the measurement reports of these UEs and transmit an HO REPORT UPDATE message containing the aggregated information to the RAN node 2. Alternatively, the RAN node 3 may transmit an HO REPORT UPDATE message to the RAN node 2 every time it receives a measurement report from one UE.

The HO REPORT UPDATE message contains a first IE indicating whether or not the handover is a handover based on an unintended event, a second IE in which information about quality of a cell measured by the UE is set, and a third IE in which RLF report information is set. The HO REPORT UPDATE message also contains a fourth IE in which HO configuration information related to the handover performed by the UE 6 is set, and a fifth IE in which QoS information is set.

The RAN node 3 may determine whether the handover performed by the UE 6 is a normal handover (a normal HO) or a handover based on an unintended event that has occurred during the HO, and set a result of the determination in the first IE. Note that similarly to the first operation example, when information indicating that the handover is a handover based on an unintended event is set in the first IE, the first IE may indicate which of a Too Late Handover, a Too Early Handover, and a Handover to wrong cell the unintended event corresponds to.

The RAN node 3 sets quality information contained in the measurement report received from the UE 6 in the second IE. The RAN node 3 may set RLF report information contained in the measurement report received from the UE 6 in the third IE. The RAN node 3 may set HO configuration information contained in the measurement report received from the UE 6 in the fourth IE. The RAN node 3 sets QoS information in the fifth IE. The RAN node 3 transmits an HO REPORT UPDATE message containing the first to fifth IEs to the RAN node 2.

Note that, as described above, in the inter-node interface establishment procedure, the management relation described in the fifth example embodiment is established between the RAN node 2, which is the AI-enhanced RAN node, and the RAN node 3. In the inter-node interface establishment procedure, the RAN node 2 may request the RAN node 3 to transmit the information related to the HO. In this case, the steps S121 and S122 may not be performed (e.g., skipped).

As described above, the RAN node 2 can receive information related to a HO from the RAN node 3. Further, the information transmitted from the RAN node 3 to the RAN node 2 is information based on a measurement report transmitted from the UE 6, and the UE 6 indirectly transmits information contained in the measurement report to the RAN node 2 through the RAN node 3. In other words, the RAN node 2 indirectly receives the information contained in the measurement report from the UE 6 through the RAN node 3. Therefore, according to the RAN nodes 2 and 3 and the UE 6, the AI-capable RAN node 2 contributes to the transmission/reception of information to/from the RAN node 3 and the UE 6. Further, the RAN node 2 can acquire various types of information contained in the message transmitted from the RAN node 3, such as cell quality information, RLF report information, HO configuration information related to an event used for an HO, and QoS information. Therefore, the RAN node 2 can further optimize the control of communication in the RAN using the AI function included in the RAN node 2 based on information received from the RAN node 3.

### (Ninth Example Embodiment)

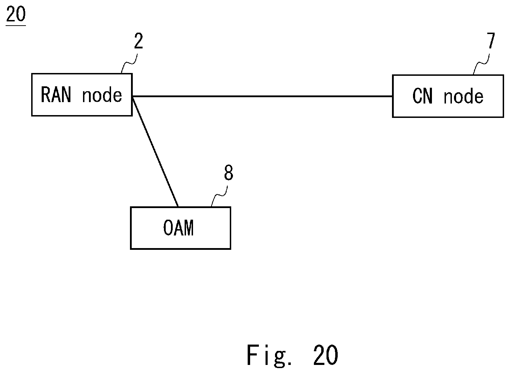

In a ninth example embodiment, a procedure in which an RAN node including an AI function acquires network information from a CN (Core Network) node and an OAM (Operations, Administration and Management) apparatus is provided. A communication system 20 according to the ninth example embodiment will be described with reference to Fig. 20. Fig. 20 shows an example of a configuration of a communication system according to the ninth example embodiment. The communication system 20 includes an RAN node 2, a CN node 7, and an OAM apparatus 8. An example of the configuration of the RAN node 2 is similar to that in the first example embodiment shown in Fig. 2. Each of the CN node 7 and the OAM apparatus 8 may be a computer apparatus that operates as a processor execute a program stored in a memory. Note that it is assumed that an inter-node interface(s) has already been established among the RAN node 2, the CN node 7, and the OAM apparatus 8.

The CN node 7 is, for example, a NWDAF (Network Data Analytic Function). The CN node 7 includes a function of collecting and analyzing various types of data acquired in a network in a 5GC. The OAM apparatus 8 has a function of operating and managing the communication system 20.

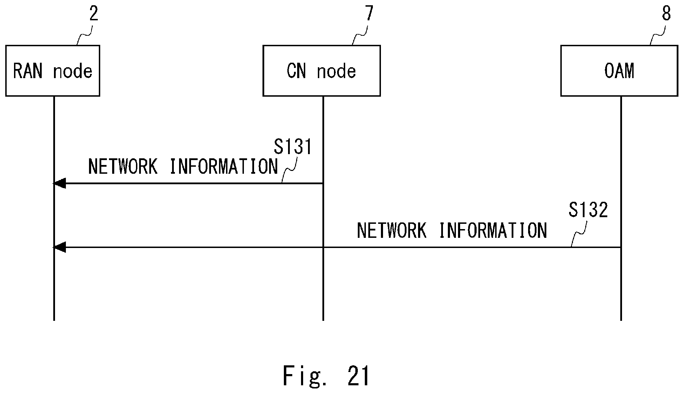

Next, a procedure in which the RAN node 2 acquires network information from the CN node 7 and the OAM apparatus 8 will be described with reference to Fig. 21. Fig. 21 shows a procedure for acquiring network information.

In a step S 131, the CN node 7 transmits network information to the RAN node 2. The step S131 may be performed, for example, via an NWDAF subscription service. The network information transmitted from the CN node 7 may contain, for example, a Network function load, a slice load, and a service experience. The network information may include Network performance. The network information may include UE mobility. The network performance may include statistics or a prediction of a state of an RAN node such as a gNB, resource usage, communication and mobility performance, the number of UEs in an area of interest, and an average ratio of successful handovers. The UE mobility may be a time series of statistics or predictions of the location of a specific UE or a group of UEs.

In a step S132, the OAM apparatus 8 transmits network information to the RAN node 2. The network information transmitted from the OAM apparatus 8 may contain area information of a cell or the like in which a UE is present, traffic information, and statistical information. The statistical information may contain statistical information about handovers, and statistical information about calling processes such as call connections and call disconnections. Note that the step S132 may be performed before the step S131, after the step S131, or simultaneously with the step S131.

As described above, the RAN node 2 can receive network information from the CN node 7 and the OAM apparatus 8. Therefore, according to the RAN node 2, the CN node 7, and the OAM apparatus 8, the AI-capable RAN node 2 contributes to the transmission/reception of information to/from the CN node 7 and the OAM apparatus 8. Further, the RAN node 2 can further optimize the control of communication in the RAN using the AI function included in the RAN node 2 based on the network information.

### (Tenth example embodiment)

In a tenth example embodiment, a procedure in which an RAN node including an AI function transmits information output by this RAN node to another RAN node and a UE present in a cell served by the other RAN node is provided. Further, the tenth example embodiment provides a specific example of the fourth example embodiment. In the present example embodiment, for example, a procedure in which when an AI model outputs HO configuration information and assistance information related to a handover, an RAN node including an AI function transmits HO-relevant information that may contain the HO configuration information and the assistance information to another RAN nodes and a UE is provided.

A communication system according to this example embodiment is similar to that in the third example embodiment shown in Fig. 5. Further, an example of the configuration of each of the RAN nodes 2 to 4 is similar to that in the first example embodiment shown in Fig. 2. An example of the configuration of the UE 6 is similar to that in the third example embodiment shown in Fig. 6. Note that it is assumed that the RAN nodes 2 to 4 have already established an inter-node interface(s) among them, and that the RAN nodes 3 and 4 accepts to be managed by the RAN node 2. Further, although the UE 6 is supposed to move from the cell 5-2 to the cell 5-1 in Fig. 5, the UE 6 may move from the cell 5-2 to the cell 5-1, or may have already been present in the cell 5-1 from the past.

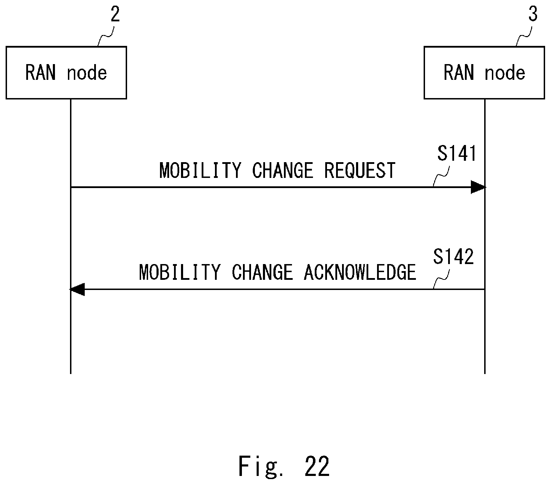

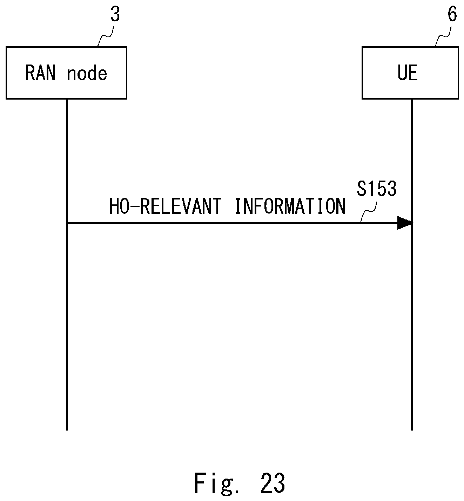

A procedure in which the RAN node 2 transmits HO-relevant information, which may contain HO configuration information and assistance information related to a handover, to the RAN node 3 and the UE 6 is described hereinafter. Firstly, a first operation example in the tenth example embodiment will be described with reference to Figs. 22 and 23. Figs. 22 and 23 show procedures related to the transmission of HO-relevant information.

In a step S141 shown in Fig. 22, the RAN node 2 transmits a MOBILITY CHANGE REQUEST message containing HO-relevant information to the RAN node 3. Not that, in this example embodiment, the RAN node 2 also transmits, to each of RAN nodes other than the RAN node 3, such as the RAN node 4, HO-relevant information unique to that RAN node, though it is neither shown in the drawings nor described in the specification.

The MOBILITY CHANGE REQUEST message contains a sixth IE. The sixth IE indicates in which RRC state the UE 6 uses the HO-relevant information contained in the MOBILITY CHANGE REQUEST message. Specifically, the sixth IE indicates whether the HO-relevant information is used for a handover performed in an RRC connected state or used for cell reselection performed in a state other than the RRC connected state. More specifically, the sixth IE indicates whether the HO-relevant information is used for an RRC_CONNECTED HO, for cell reselection in an RRC idle state, or for cell reselection in an RRC inactive state.

The RAN node 2 transmits, to the RAN node 3, a MOBILITY CHANGE REQUEST message containing a sixth IE that is set based on the use (or the purpose of the use) of the HO-relevant information contained in the MOBILITY CHANGE REQUEST message.

The MOBILITY CHANGE REQUEST message contains a seventh IE in which HO configuration information is set. The RAN node 2 sets, in the seventh IE, HO configuration information to be transmitted to the RAN node 3 and the UE 6 communicating with the RAN node 3. The information set in the seventh IE may be referred to as Mobility configuration update information. The HO configuration information may be information for each cell, information for each UE, information for each UE group including one or more UEs, or information for each of arbitrary combinations thereof. In other words, the MOBILITY CHANGE REQUEST message may contain HO configuration information according to the number of cells served by the RAN node 3, or may contain HO configuration information according to the number of UEs communicating with the RAN node 3. The HO configuration information may contain information similar to the HO parameters IE described above in the seventh example embodiment. Specifically, the HO configuration information may contain setting values of parameters of Events A1 to A6 and HO causes. Note that setting values of parameters of some of the Events A1 to A6 and HO causes corresponding to the respective events may be set in the HO configuration information. Alternatively, setting values of parameters of events different from the Events A1 to A6 and HO causes corresponding to the respective events may be set in the seventh IE.

The MOBILITY CHANGE REQUEST message includes an eighth IE in which assistance information related to the handover is set. Assistance information for all the UEs present in the cell 5-1 served by the RAN node 3 may be set in the eighth IE. Alternatively, assistance information for a specific UE present in the cell 5-1 or for each of a group of at least one UE (i.e., a UE set) contained in a specific list may be set in the eighth IE. The RAN node 2 sets assistance information to be transmitted to the RAN node 3 and the UE 6 communicating with the RAN node 3 in the eighth IE.

The assistance information may contain a probability of a success (hereinafter also referred to as a success probability) of a handover from the cell 5-1 served by the RAN node 3 to a predetermined neighbor cell adjacent to the cell 5-1, which is selected as a candidate cell that may become a target cell. In other words, the assistance information may contain a success probability of a handover from the cell 5-1 served by the RAN node 3 to another cell included in candidate cells which may become a target cell when the UE 6 performs the handover from the cell 5-1 to the other cell. The predetermined neighbor cell may be all the cells adjacent to the cell 5-1 or a specific cell among the cells adjacent to the cell 5-1. Note that when the sixth IE indicates that it is used for cell reselection in an RRC idle state or an RRC inactive state, the success probability may indicate a success probability of an event in which cell reselection from the cell 5-1 to a predetermined neighbor cell is performed.

The success probability may include a success probability of a handover to a beam that is emitted from the RAN node serving a neighbor cell adjacent to the cell 5-1 and directed to the neighbor cell. Alternatively, the success probability may include a success probability of a handover to other RAN nodes. The success probability is not limited to those for the RAN node and may include success probabilities of a handover to other network functions. The success probability may include a probability of a failure (hereinafter also referred to as a failure probability) of a handover from the cell 5-1 served by the RAN node 3 to a predetermined neighbor cell which is adjacent to the cell 5-1 and may be selected as a candidate cell that may become a target cell. The success probability may include a probability of a normal HO, a probability of a Failed HO, and a probability of an unintended HO. Further, the success probability may include a success probability for each of unintended HOs. That is, the success probability may include a probability of a Too Late Handover, a probability of a Too Early Handover, and a probability of a Handover to Wrong Cell.

The success probability contained in the assistance information may be a success probability for each combination of the cell 5-1 served by the RAN node 3 and each one of predetermined neighbor cells. The success probability may be set as, for example, an indicator for each of the combinations of the cell 5-1 and each one of the predetermined neighbor cells. The setting values of these indicators may include 0 (zero) and 1. When the setting value of an indicator is 0 (zero), the indicator may indicate a low probability representing a low success probability. When the setting value of an indicator is 1, the indicator may indicate a high probability representing a high success probability. Note that when the setting value of an indicator is 0 (zero), the indicator may indicate a high probability, and when the setting value of the indicator is 1, the indicator may indicate a low probability.

Alternatively, as the success probability, for example, an array of indicators each of which indicates a success probability of a respective one of the combinations of the cell 5-1 served by the RAN node 3 and each one of the predetermined neighbor cells may be set in the form of a bitmap. Each of the elements of this array may indicate information about a probability of a successful normal handover, information about a probability of an unsuccessful handover, and information about a probability of a successful handover associated with an unintended event. The setting value of the indicator set in each element may include 0 (zero) and 1. When the setting value of an indicator is 0 (zero), the indicator may indicate a low probability representing a low success probability. When the setting value of an indicator is 1, the indicator may indicate a high probability representing a high success probability.

Alternatively, the success probability may be set as information containing a plurality of setting values for each of the combinations of the cell 5-1 and each one of the predetermined neighbor cells. This information may have values each of which has, for example, any value from 0 (zero) to 5, and each of the values indicates a degree of a success probability of a handover from the cell 5-1 to a respective one of the predetermined neighbor cells. The degree of a success probability may include, for example, "very low" representing a very low success probability, "low" representing a low success probability, and "medium" representing a normal success probability. Further, the degree of a success probability may also include "high" indicating a high success probability, and "very high" indicating a very high success probability. Note that the degree of success may be set as desired, and the number of possible values the degree of success can have may be more than five or less than five.

Further, the assistance information may also contain information about an estimated number of UEs when the sixth IE indicates that it is used for an RRC_CONNECTED HO. The information about the estimated number of UEs is information about an estimated number of UEs that are expected to perform a handover to the cell 5-1 served by the RAN node 3 within a predetermined time, and which may be used to prepare a resource(s) for a conditional handover (CHO: Conditional Handover).

Further, the assistance information may also contain information about recommendation (hereinafter also referred to as recommendation information) indicating whether or not a handover from the cell 5-1 served by the RAN node 3 to a specific cell is recommended. The specific cell may be the same cell as the neighbor cell related to the success probability, may be all the cells adjacent to the cell 5-1, may be some of the cells adjacent to the cell 5-1, and/or may include cells other than the cells adjacent to the cell 5-1. Note that the recommendation information may indicate recommendation information for cell reselection from the cell 5-1 to a predetermined neighbor cell when the sixth IE indicates that it is used for cell reselection in an RRC idle state or an RRC inactive state.

The recommendation information may be information indicating whether or not a handover to a beam that is emitted from the RAN node serving a specific cell and directed to the specific cell is recommended. Alternatively, the recommendation information may be information indicating whether or not a handover to other RAN nodes is recommended. Alternatively, the recommendation information is not limited to those for the RAN node and may be information indicating whether or not a handover to other network functions is recommended.

The recommendation information contained in the assistance information may contain recommendation information for each of the combinations of the cell 5-1 served by the RAN node 3 and each one of specific cells. The recommendation information may be set as, for example, an indicator for each of the combinations of the cell 5-1 and each one of the predetermined neighbor cells. The setting values of these indicators may include 0 (zero) and 1. When the setting value of the indicator is 0 (zero), the indicator may indicate "not recommended for handover" indicating that a handover from the cell 5-1 to a specific cell is not recommended. When the setting value of the indicator is 1, the indicator may indicate "recommended for handover" indicating that a handover from the cell 5-1 to a specific cell is recommended. Note that when the setting value of the indicator is 0 (zero), the indicator may indicate "recommended for handover", and when the setting value of the indicator is 1, the indicator may indicate "not recommended for handover".

Alternatively, as the recommendation information, for example, an array of indicators each of which indicates recommendation information of a respective one of the combinations of the cell 5-1 served by the RAN node 3 and each one of the predetermined neighbor cells may be set in the form of a bitmap. Each of the elements in the array may be an indicator indicating recommendation information for a respective one of the combinations of the cell 5-1 served by the RAN node 3 and each one of the specific cells.

Alternatively, the recommendation information may be set as information containing a plurality of setting values for each of the combinations of the cell 5-1 served by the RAN node 3 and each one of the predetermined neighbor cells. This information may have values each of which has, for example, any value from 0 (zero) to N (N: an integer equal to or larger than 1), and each of the values indicates a degree of recommendation of a handover from the cell 5-1 served by the RAN node 3 to a respective one of the specific cells.

Alternatively, the recommendation information may be associated with, for example, a success probability for each of the combinations of the cell 5-1 served by the RAN node 3 and each one of the specific cells. For example, the recommendation information contains, for each of the combinations of the cell 5-1 and each one of the predetermined neighbor cells, information about a probability of a successful normal handover, a probability of unsuccessful handover, and a probability of a successful handover associated with an unintended event. In this case, the recommendation information may contain recommendation information corresponding to each of the probability of a successful normal handover, the probability of unsuccessful handover, and the probability of a successful handover associated with an unintended event.

As shown in Fig. 22, in a step S142, when the RAN node 3 has normally received a MOBILITY CHANGE REQUEST message, it transmits a MOBILITY CHANGE ACKNOWLEDGE message to the RAN node 2. The RAN node 3 reflects the HO-relevant information contained in the MOBILITY CHANGE REQUEST message onto the RAN node 3.

As shown in Fig. 23, in a step S153, the RAN node 3 transmits the HO-relevant information received from the RAN node 2 to the UE 6 present in the cell 5-1 served by the RAN node 3. Note that, in this example embodiment, the RAN node 2 transmits HO-relevant information to a RAN node(s) managed by the RAN node 2 including the RAN node 4, though it is neither shown in the drawings nor described in the specification. Further, the RAN node(s) managed by the RAN node 2 transmits the HO-relevant information received from the RAN node 2 to a UE(s) present in a cell(s) served by each of the RAN node(s).

When the UE 6 is in an RRC_CONNECTED state, the RAN node 3 may transmit the HO-relevant information received from the RAN node 2 to the UE 6 by using RRC signaling. When the UE 6 is not in the RRC_CONNECTED state, the RAN node 3 may transmit the assistance information received from the RAN node 2 to the UE 6 by broadcasting system information (SI: System Information). Alternatively, the RAN node 3 may transmit the HO configuration information received from the RAN node 2 to the UE 6 by broadcasting the system information (SI) irrespective of whether or not the UE 6 is in the RRC_CONNECTED state. The system information may be System Information Block Type 1 (SIB 1), SIB1 and other SI, or SI other than SIB1.

Note that the HO-relevant information transmitted from the RAN node 2 to the RAN node 3 and the HO-relevant information transmitted from the RAN node 3 to the UE 6 may have the below-shown structure.

**[Table 7]**

| Mobility configuration update information and assistance information: | | | | | | | | |
|---|---|---|---|---|---|---|---|---|
| • RAN node ID | | | | | | | | |
| | ➢ (Conditional) DU ID 1..L | | | | | | | |
| | | ✧ Cell ID 1..M | | | | | | |
| | | | • UE group ID 1..N | | | | | |
| | | | | > Indicator whether it is for RRC_CONNECTED state UEs or for RRC INACTIVE and RRC_IDLE UEs | | | | |
| | | | | ➢ HO parameter set ID 1..P | | | | |
| | | | | | ✧ HO parameters specific to this set | | | |
| | | | | | ✧ Information how this set is used for HO purposes | | | |
| | | | | ➢ Assistance information | | | | |
| | | | | | ✧ Case "probability" | | | |
| | | | | | | • Neighbor Cell ID 1..Q | | |
| | | | | | | | ➢ (Optional) Probability of successful HO | |
| | | | | | | | ➢ (Optional) Probability ID 1..R | |
| | | | | | | | | ✧ Probability |
| | | | | | ✧ Case "recommendation" | | | |
| | | | | | | • Neighbor Cell ID 1..X | | |
| | | | | | | | ➢ Recommendation value | |
| | | | | | ✧ Case "number of UEs" | | | |
| | | | | | | • Number of UEs | | |

As described above, HO-relevant information may contain Mobility configuration update information indicating HO configuration information and assistance information. The HO-relevant information may contain a RAN node ID for identifying a RAN node (the RAN node 3) to which the HO-relevant information is transmitted. When the RAN node 3 manages a DU, the HO-relevant information may contain a DU ID for identifying the DU. The HO-relevant information may contain a cell ID for identifying a cell served by the RAN node 3. The HO-relevant information may contain a UE group ID for identifying a UE group present in a cell(s) served by the RAN node 3 to which the HO-relevant information is transmitted. That is, the HO-relevant information may contain the same number of pieces of Mobility configuration update information and the same number of pieces of assistance information as the number of DUs, the number of cells, and/or the number of UE groups. The HO-relevant information may contain "Indicator whether it is for RRC _ CONNECTED state UEs or for RRC_INACTIVE and RRC_IDLE UEs" which is an indicator corresponding to the above-described sixth IE. The HO-relevant information may contain HO configuration information which may contain setting values of HO parameters (an HO parameter set), and a purpose of an HO for which the HO parameter set is used, corresponding to the HO cause. The HO-relevant information may contain assistance information. The assistance information may contain a Case "Probability" indicating a success probability to a neighbor cell, a Case "recommendation" corresponding to recommendation information, and a Case "number of UEs" corresponding to information about the estimated number of UEs.

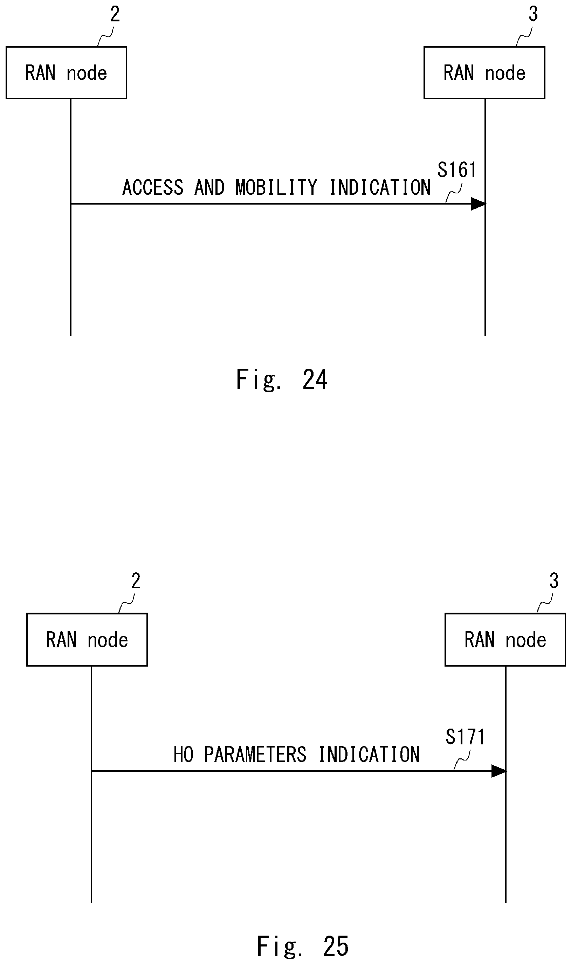

Next, a second operation example in the tenth example embodiment will be described with reference to Figs. 24 and 23. Fig. 24 shows a procedure related to the transmission of HO-relevant information. In the second operation example, an operation shown in Fig. 24 is performed, and then the operation shown in Fig. 23 is performed. In the second operation example, the operation described above with reference to Fig. 22 in the first operation example is replaced by the operation example shown in Fig. 24. Note that although the message used in the operation example shown in Fig. 24 differs from that in the operation example shown in Fig. 22, the message shown in Fig. 24 contains information similar to that contained in the MOBILITY CHANGE REQUEST message used in the first operation example. Therefore, parts of the description of the second operation example that are the same as those in the first operation example are omitted as appropriate.

In a step S161, the RAN node 2 transmits an ACCESS AND MOBILITY INDICATION message containing HO-relevant information, which may contain HO configuration information and assistance information, to the RAN node 3. The ACCESS AND MOBILITY INDICATION message contains a sixth IE. The sixth IE indicates whether the HO-relevant information is used for an RRC_CONNECTED HO, for cell reselection in an RRC idle state, or for cell reselection in an RRC inactive state.

The ACCESS AND MOBILITY INDICATION message contains a seventh IE in which HO configuration information is set. The RAN node 2 sets, in a seventh IE, HO configuration information to be transmitted to the RAN node 3 and the UE 6 communicating with the RAN node 3. The information set in the seventh IE may be referred to as Mobility configuration update information.

The ACCESS AND MOBILITY INDICATION message contains an eighth IE in which assistance information is set. The RAN node 2 sets assistance information to be transmitted to the RAN node 3 in the eighth IE. The assistance information may contain a success probability, information about an estimated number of UEs, and recommendation information.

Next, a third operation example in the tenth example embodiment will be described with reference to Figs. 25 and 23. Fig. 25 shows a procedure related to the transmission of HO-relevant information. In the third operation example, an operation shown in Fig. 25 is performed, and then the operation shown in Fig. 23 is performed. In the third operation example, the operation described above with reference to Fig. 22 in the first operation example is replaced by the operation example shown in Fig. 25. Note that although the message used in the operation example shown in Fig. 25 differs from that in the operation example shown in Fig. 22, the message shown in Fig. 25 contains information similar to that contained in the MOBILITY CHANGE REQUEST message used in the first operation example. Therefore, descriptions of features in the third operation example that are similar to those in the first operation example are omitted as appropriate.

In a step S171, the RAN node 2 transmits an HO PARAMETERS INDICATION message containing HO-relevant information, which may contain HO configuration information and assistance information, to the RAN node 3. The HO PARAMETERS INDICATION message contains a sixth IE. More specifically, the sixth IE indicates whether the HO-relevant information is used for an RRC_CONNECTED HO, for cell reselection in an RRC idle state, or for cell reselection in an RRC inactive state.

The HO PARAMETERS INDICATION message contains a seventh IE in which HO configuration information is set. The RAN node 2 sets, in a seventh IE, HO configuration information to be transmitted to the RAN node 3 and the UE 6 communicating with the RAN node 3. The information set in the seventh IE may be referred to as Mobility configuration update information.

The HO PARAMETERS INDICATION message contains an eighth IE in which assistance information is set. The RAN node 2 sets assistance information to be transmitted to the RAN node 3 in the eighth IE. The assistance information may contain a success probability, information about an estimated number of UEs, and recommendation information.

As described above, the RAN node 2 can transmits HO-relevant information to the RAN node 3 and the UE 6. Therefore, according to the RAN nodes 2 and 3 and the UE 6, the AI-capable RAN node 2 contributes to the transmission/reception of information to/from the RAN node 3 and the UE 6. Further, the RAN node 2 can transmit updated HO configuration information to the RAN node 3 and the UE 6 by performing the above-described procedure. Further, the RAN node 2 can transmit assistance information related to the handover to the RAN node 3 and the UE 6 by performing the above-described procedure. The RAN node 3 and the UE 6 can update HO configuration information based on the HO configuration information received from the RAN node 2, and therefore can optimize the HO configuration information. Further, the RAN node 3 and the UE 6 can determine a cell having a high probability of succeeding in a handover or a cell having a high probability of failing in a handover based on the assistance information received from the RAN node 2, and therefore can improve the handover performance.

### (Eleventh Example Embodiment)

Next, the eleventh example embodiment will be described. This example embodiment is an example embodiment in which two or more of the above-described example embodiments are combined to each other. Firstly, prior to describing details of this example embodiment, an overview of this example embodiment will be described.

In an LTE system, an MRO (Mobility Robustness Optimization) function is introduced. The MRO function is a function for detecting and correcting the below-described problem related to UE mobility which deteriorates QoE (Quality of Experience) for a user and makes system resources wasted.
- Connection failure due to intra-LTE or inter-RAT (Radio Access Technology) mobility
- Unnecessary HO to another RAT (a too early inter-RAT HO that with no radio link failure)
- Inter-RAT ping-pong

The MRO function is also introduced in an NR system. The MRO function was studied in Release 16 and results of the study were reflected on Non-patent Literature 5 (TR37.816). Further, the standardization under a WI (Work Item) "Enhancement of data collection for SON/MDT in NR" in Release 17 is ongoing.

In the NR system, several unintended events including a connection failure due to intra-system mobility are taken into consideration. The several unintended events include:
- Intra-system Too Late Handover:
   An event in which a radio link failure (RLF) occurs after a UE has stayed for a long period of time in the cell, and the UE attempts to re-establish the radio link connection in a different cell.
- Intra-system Too Early Handover:
   An event in which an RLF occurs shortly after a successful handover from a source cell to a target cell or a handover failure occurs during the handover procedure, and the UE attempts to re-establish the radio link connection in the source cell.
- Intra-system Handover to Wrong Cell:
   An event in which an RLF occurs shortly after a successful handover from a source cell to a target cell or a handover failure occurs during the handover procedure, and the UE attempts to re-establish the radio link connection in a cell other than the source cell and the target cell.

With regard to these features, the below-described solution is currently studied in a WI "Enhancement of data collection for SON/MDT in NR" in Release 17. The below-described solution is also referred to as a SON (Self-Organizing Network) SHO solution.
- If one of the above-described unintended events happens, a UE provides a related report to the target RAN node after a successful HO (SHO).
- The target RAN node transmits SHO report containing reports from one or several UEs that experienced the above-described unintended events to the source RAN node (the original serving RAN node).
- The source RAN node may update related parameters (related to an HO, an RLM (radio link monitoring), etc.) to try to decrease the probability of the reported unintended events.

As described above, in the SON SHO report solution, the target RAN node transmits SHO report containing reports from one or several UEs that experienced one or several described unintended events to the source RAN node. The matters related the SON SHO report solution that should be discussed is mentioned, for example, in Non-patent Literature 6 (R3-206048), Non-patent Literature 7 (R3-207012), and Non-patent Literature 8 (R3-207026).

When the target gNB and the source gNB have an Xn interface, Xn signaling is used to transmit an SHO report from the target gNB to the source gNB. For example, an ACCESS AND MOBILITY INDICATION message in the Xn protocol can be used.

When the target gNB and the source gNB do not have an Xn interface, NG signaling via an AMF (Access and Mobility management function) is used to transmit the SHO report from the target gNB to the source gNB. For example, an UPLINK RAN CONFIGURATION TRANSFER message and a DOWNLINK RAN CONFIGURATION TRANSFER message in the NG protocol may be used.

When the source gNB is split into a gNB-CU and a gNB-DU, F1 signaling is used to transmit the SHO report from the target gNB to the source gNB. For example, an ACCESS AND MOBILITY INDICATION message in the F1 protocol may be used. Further, for example, an SHO Report IE can be added in the ACCESS AND MOBILITY INDICATION message.

After the source gNB or the source gNB-DU has received the message containing the SHO report, the source gNB or the source gNB-DU may attempt to update the local parameters (mostly related to an HO or a radio link management) of the source gNB or the source gNB-DU. In this way, the source gNB or the source gNB-DU decreases the probability of reported unintended events in the future.

Note that even when the above-described SON solution based on the SHO report is applied to the NR system, the following problems may occur.
(1) Degradation of user QoE and waste of system resources happen anyway:
   In the SON solution, a source RAN node is trying to change parameters after unintended event has already happen. However, there is no guarantee that a new set of parameters is better than the original one. Further, a long sequence of trial and error may be required to obtain optimal parameters, and there is no guarantee of convergence. Therefore, even when the SON solution based on the SHO report is introduced, degradation of user QoE and waste of system resources may continuously happen.
(2) Important information may be missing:
   UE measurements and subsequent SHO report are triggered only when an unintended event happens. In other words, the RAN node that updates parameters does not receive UE measurements containing values that correspond to a normal HO without unintended events. However, the SON needs to receive UE measurements containing values that correspond to a normal HO without unintended events in order to increase the probability of normal HOs. That is, even when the SON solution based on the SHO report is introduced, optimal parameter values cannot be obtained unless the parameters are updated by using values corresponding to a normal HO without unintended events. Therefore, even when the SON solution based on the SHO report is introduced, degradation of user QoE and waste of system resources may continuously happen.
(3) Although Local information and Local adaptation are used in a system, a change in one RAN node parameters influences performance in other RAN nodes serving neighbor cells:
   The SHO report is provided to a serving gNB or a serving gNB-DU. Further, these nodes attempt to update local parameters. However, the effects of such changes may propagate through the whole RAN. Further, there are multiple parameter changes happening in parallel and interfering with each other. Further, other optimization processes are happening in parallel, e.g., capacity and coverage optimization, load balancing etc. that impact HO performance. Therefore, there is no guarantee that many local processes will result in at least one of improvement and stable operation. Therefore, even when the SON solution based on the SHO report is introduced, degradation of user QoE and waste of system resources may continuously happen.

This example embodiment provides a solution for dealing with unintended events related to UE HOs in order to solve the above-described problems that occur when the SON solution based on the SHO report is applied. Note that the unintended events include:
- Intra-system Too Late Handover:
- Intra-system Too Early Handover:
- Intra-system Handover to Wrong Cell.

Specifically, in this example embodiment, the probability of each of the above-described events is reduced. Further, this example embodiment provides an extensible solution by which, even when other types of unintended events occur, the probabilities of such types of unintended events are also reduced.

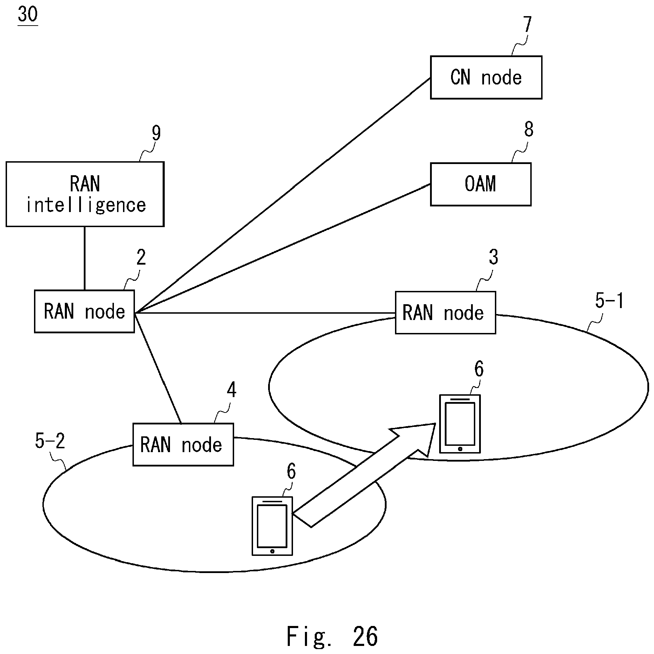

A communication system 30 according to the eleventh example embodiment will be described with reference to Fig. 26. Fig. 26 shows an example of a configuration of a communication system according to the eleventh example embodiment. The communication system 30 includes RAN nodes 2 to 4, a UE 6, a CN node 7, an OAM apparatus 8, and a RAN intelligence apparatus 9. The RAN nodes 2 to 4, the UE 6, the CN node 7, and the OAM apparatus 8 are identical to the RAN nodes 2 to 4, the UE 6, the CN node 7, and the OAM apparatus 8 in the above-described example embodiments. An example of the configuration of each of the RAN nodes 2 to 4 is similar to that in the first example embodiment shown in Fig. 2. An example of the configuration of the UE 6 is similar to that in the third example embodiment shown in Fig. 6. Note that, although the RAN intelligence apparatus 9 is shown as an apparatus that is provided separately from the RAN node 2 in Fig. 26, the RAN intelligence apparatus 9 may be provided inside the RAN node 2.

The RAN intelligence apparatus 9 is identical to the RAN intelligence apparatus described in the first example embodiment. The RAN intelligence apparatus 9 may be a computer apparatus that operates as a processor execute a program stored in a memory. The RAN intelligence apparatus 9 may be, for example, an RIC defined by the O-RAN. The RAN intelligence apparatus 9 is, for example, a control unit for making the RAN intelligent, and is a control unit that controls communication in the RAN. The RAN intelligence apparatus 9 performs, for example, policy management, analysis of the RAN, management of AI-based functions, load distribution for each UE, management of radio resources, management of QoS, and mobility management such as handover control.

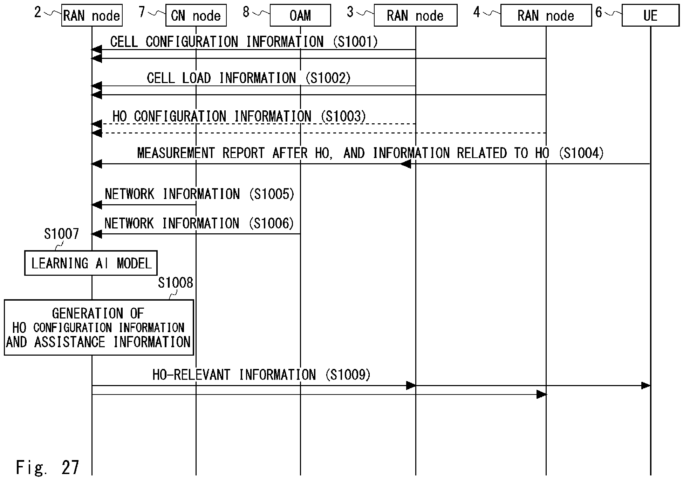

Next, an example of operations performed by the communication system 30 according to the eleventh example embodiment will be described with reference to Fig. 27. Fig. 27 shows an example of operations performed by a communication system according to the eleventh example embodiment. Note that steps S1001 to S1006 and a step S1009 shown in Fig. 27 correspond to the operations described in one of the above-described example embodiments. Therefore, in the following description, the above-described example embodiments will also be referred to as appropriate, and redundant descriptions will be omitted as appropriate.

In a step S1001, the RAN nodes 3 and 4 establish an inter-node interface(s) and transmit cell configuration information to the RAN node 2. The step S1001 corresponds to that in the operation example described in the fifth example embodiment. The RAN nodes 2 and 3 establish an inter-node interface(s) and establish a management relation between the RAN nodes 2 and 3 by performing the corresponding parts in the first and second operation examples in the fifth example embodiment. The RAN node 2 receives cell configuration information from the RAN node 3. Further, the RAN nodes 2 and 4 also establish an inter-node interface(s) and establish a management relation between the RAN nodes 2 and 4 by performing the corresponding parts in the first and second operation examples in the fifth example embodiment. The RAN node 2 receives cell configuration information from the RAN node 4. Note that the procedure for establishing an inter-node interface in the step S1001 is performed at the beginning of the operations in Fig. 27, and the acquisition of updated cell configuration information and steps S1002 to S1006 (which will be described later) may be performed in parallel with the step S1001.

In a step S1002, the RAN nodes 3 and 4 transmit cell load information to the RAN node 2. The step S1002 corresponds to that in the operation example described in sixth example embodiment. The RAN node 2 receives cell load information from the RAN node 3 by performing the corresponding part in the operation example described in the sixth example embodiment. Further, the RAN node 2 receives cell load information from the RAN node 4 by performing the corresponding part in the operation example described in the sixth example embodiment.

In a step S1003, the RAN nodes 3 and 4 transmit HO configuration information to the RAN node 2. The step S1003 corresponds to that in the operation example described in seventh example embodiment. The RAN nodes 2 and 3 performs at least one of the corresponding parts in the first to third operation examples described in the seventh example embodiment, so that the RAN node 2 receives HO configuration information from the RAN node 3. Further, the RAN nodes 2 and 4 perform at least one of the corresponding parts in the first to third operation examples described in the seventh example embodiment, so that the RAN node 2 receives HO configuration information from the RAN node 4.

In a step S1004, the UE 6 transmits a Measurement Report obtained after the handover to the RAN node 3, and the RAN node 3 transmits, to the RAN node 2, cell quality information and information related to the HO containing an indicator indicating whether or not the handover of the UE 6 has been normally performed. The step S1004 corresponds to that in the operation example described in the eighth example embodiment. The RAN nodes 2 and 3, and the UE 6 perform at least one of the corresponding parts in the first to third operation examples in the eighth example embodiment, so that the UE 6 transmits the measurement report to the RAN node 3 and the RAN node 3 transmits the information related to the HO to the RAN node 2. Note that although it is not shown in Fig. 27, when the UE has performed a handover to the cell 5-2 served by the RAN node 4, the RAN nodes 2 and 4, and the UE, which has performed the handover, perform at least one of the corresponding parts in the first to third operation examples in the eighth example embodiment. Further, the UE, which has performed the handover to the cell 5-2 served by the RAN node 4, transmits the measurement report to the RAN node 4, and the RAN node 4 transmits the information related to the HO to the RAN node 2.

In a step S1005, the CN node 7 transmits network information to the RAN node 2. Further, in a step S1006, the OAM apparatus 8 transmits network information to the RAN node 2. The steps S1005 and S1006 correspond to those in the operation example described in the ninth example embodiment. The RAN node 2, the CN node 7, and the OAM apparatus 8 perform the corresponding parts in the operation example described in the ninth example embodiment, so that the RAN node 2 receives the network information from the CN node 7 and the OAM apparatus 8 by.

In a step S1007, the RAN node 2 makes an AI model held by (i.e., included in) the RAN intelligence apparatus 9 or an AI model acquired from the RAN intelligence apparatus 9 perform learning based on the information received in the steps S1001 to S1006. The AI model is a learning model that receives information from another apparatus(es) (another network element(s)) in the steps S1001 to S1006, and performs control of communication in the RAN. In this example embodiment, the AI model is a learning model that receives information from another apparatus(es) in the steps S 1001 to S1006, and outputs at least one of optimized HO configuration information and assistance information related to a handover. When the RAN node 2 receives information from another apparatus for the first time in the steps S1001 to S1006, it makes the AI model perform initial learning. Further, the RAN node 2 periodically makes the AI model perform learning and thereby updates the AI model every time the RAN node 2 receives information from the other apparatus in the steps S1001 to S1006.

The RAN node 2 receives, from another RAN node, information related to the HO containing feedback from an unintentional HO event (i.e., a negative HO event) and a normal (intended) HO event (i.e., a positive HO event). Therefore, in the steps S1001 to S1006, the RAN node 2 updates the AI model by making it perform reinforcement learning based on the information received from the other apparatus.

For example, the RAN node 2 inputs the information received in the steps S1001 to S1006 to a learning apparatus for updating the AI model.
- Cell load information of the source cell and the target cell
- HO configuration information for the source cell
- Information contained in measurement report obtained after the UE has performed a handover
   - RSRP, RSRQ and SINR of the last serving cell before the handover and the target cell of the handover
   - RLF report information
   - HO event name (one of Event A1 to A6), HO configuration information, HO cause
- QoS Information (UE QoS flow and QoS parameter)
- Information related to the source cell and the target cell when the UE has performed a handover (information from the CN node 7 and the OAM apparatus 8)

Further, the RAN node 2 inputs the result of a HO related to the measurement report containing the result of the measurement performed by the UE to the learning apparatus for making the AI model perform learning in order to reinforce the learning by the AI model. Specifically, the RAN node 2 inputs information as to whether the HO related to the measurement report sent from the UE was a normal HO, a Failed HO, or an HO associated with an unintended event. The unintended event includes a Too Late Handover, a Too Early Handover, and a Handover to Wrong Cell. Therefore, when the HO is an HO associated with an unintended event, the RAN node 2 also inputs, to the learning apparatus, information as to which type of unintended events the unintended event corresponds to.

The RAN node 2 first makes the AI model perform learning by using the above-described input information received from the other network element and the result of the HO. Since the result of the HO is reported from the UE 6 after the handover, the RAN node 2 can reinforce the learning by the AI model.

When the learning phase is finished, the RAN node 2 inputs the above-described information that the RAN node 2 has newly received to the AI model, and the AI model predicts a result of the HO from a cell X to a cell Y for the received information. Further, the AI model predicts (i.e., estimates) a probability of the result of the HO for the handover from the cell X to the cell Y. That is, the AI model receives the information that the RAN node 2 has newly received, and outputs information about the probability of the occurrence of the HO from the cell X to the cell Y and the probability in regard to the result thereof.

Further, the AI model also compares, for example, probabilities of the results of HOs to cells for which different HO configuration information are set. The AI model proposes (outputs) an HO parameter for a specific set of neighbor cells with which the probability of a normal HO is increased among the cells served by the RAN node(s) managed by the RAN node 2.

After the actual HO is performed based on the prediction by the AI model, the RAN node 2 receives various types of information related to the result of the actual HO by performing the above-described steps S1001 to S1006. The RAN node 2 further improves the AI model by making it perform reinforcement learning based on the received information by using the learning apparatus. Note that although an overview of a method for making an AI model perform learning has been described above, an AI model may be trained (i.e., made to perform learning) by using a machine learning model (ML (Machine Learning) Model) that has already been established.

In a step S1008 shown in Fig. 27, the RAN node 2 generates the below-shown information by using the information received in the steps S1001 to S1006. The RAN node 2 improves the probability of a normal HO by transmitting the generated information to the RAN nodes 3 and 4, and the UE 6.
- HO configuration information containing updated values of HO parameters for cells served by the RAN node(s) managed by the RAN node 2 (HO configuration information for the RAN nodes 3 and 4, and the UE 6)
- Assistance information for an RRC_CONNECTED HO (assistance information for the RAN nodes 3 and 4, and the UE 6)
- Assistance Information for cell reselection in an RRC_IDLE state and an RRC_INACTIVE state (assistance information for the RAN nodes 3 and 4, and the UE 6)

The HO parameter has a direct influence on when an HO is triggered and/or which cell(s) is considered to be a candidate cell(s) for the HO. The assistance information is used to select a target cell of an HO from among a plurality of candidate cells.

The assistance information is the same as that described in the tenth example embodiment. The support information may contain a success probability of an event in which a handover or cell reselection from the cell 5-1 served by the RAN node 3 to a predetermined neighbor cell adjacent thereto is performed. The support information may contain a success probability of an event in which a handover or cell reselection from the cell 5-2 served by the RAN node 4 to a predetermined neighbor cell adjacent thereto is performed.

The assistance information may contain information about an estimated number of UEs that are expected to perform a handover to the cell 5-1 served by the RAN node 3 within a predetermined time, and which may be used to prepare a resource(s) for a CHO. The assistance information may include information about an estimated number of UEs that are expected to perform a handover to the cells 5-2 served by the RAN node 4 within a predetermined time, and which may be used to prepare a resource(s) for a CHO.

The support information may contain recommendation information indicating whether or not a handover or cell reselection from the cell 5-1 served by the RAN node 3 to a specific cell is recommended. The support information may contain recommendation information indicating whether or not a handover or cell reselection from the cell 5-2 served by the RAN node 4 to a specific cell is recommended.

In a step S1009, the RAN node 2 transmits HO-relevant information to the RAN nodes 3 and 4. The RAN node 3 transmits HO-relevant information to the UE 6. The step S1009 corresponds to that in the operation example described in the tenth example embodiment. The RAN nodes 2 and 3, and the UE 6 perform at least one of the corresponding parts in the first to third operation examples in the tenth example embodiment, so that the RAN node 2 transmits HO-relevant information to the RAN node 3 and the UE 6. Specifically, in a step S1009, the RAN node 2 transmits at least one of HO configuration information containing an updated value(s) of an HO parameter(s) and assistance information output by the AI model to the RAN node 3 and the UE 6.

Further, the RAN nodes 2 and 4, and a UE communicating with the RAN node 4 perform at least one of the corresponding parts in the first to third operation examples described in the tenth example embodiment, and the RAN node 2 transmits HO-relevant information to the RAN node 4 and the UE communicating with the RAN node 4.

As described above, the RAN node 2 can transmit/receive various types of information to/from another apparatus(es) (another network element(s)). Therefore, according to the RAN node 2 and the other network elements, the AI-capable RAN node 2 contributes to the transmission/reception of information to/from the RAN node 3 and the UE 6.

Further, the UE 6 measures cell quality information and the like and transmits the obtained information to the RAN node 2 after not only a handover based on an unintended event is performed, but also after a normal handover is performed. Since the RAN node 2 can acquire information about not only a handover based on an unintended event but also information about a normal handover, the RAN node 2 can output an optimum value(s) of an HO parameter(s) and can set the optimum value(s) of the HO parameter(s) in an RAN node(s) managed by the RAN node 2. Further, the information measured (i.e., obtained) by the UE 6 includes not only information about the source cell but also information about the target cell. Therefore, the RAN node 2 can set an optimum value(s) of a HO parameter(s) for all the RAN nodes managed by the RAN node 2 and all the UEs communicating these RAN nodes. That is, according to this example embodiment, it is possible to solve the problems (1) to (3) described in the overview of this example embodiment, and thereby to improve the handover performance.

Further, since the RAN node 2 can acquire information about not only a handover based on an unintended event but also information about a normal handover, it can output assistance information by which the probability a normal HO can be increased. The RAN node 2 can transmit the output assistance information to an RAN node(s) managed by the RAN node 2 and a UE(s) present in the cell(s) served by that RAN node(s). Each of the RAN node(s) managed by the RAN node 2 and the UE(s) present in the cell(s) served by that RAN node(s) can select a cell with which the probability of a normal HO is increased when the UE performs a handover based on assistance information. That is, according to this example embodiment, it is possible to solve the problems (1) to (3) described in the overview of this example embodiment, and thereby to improve the handover performance.

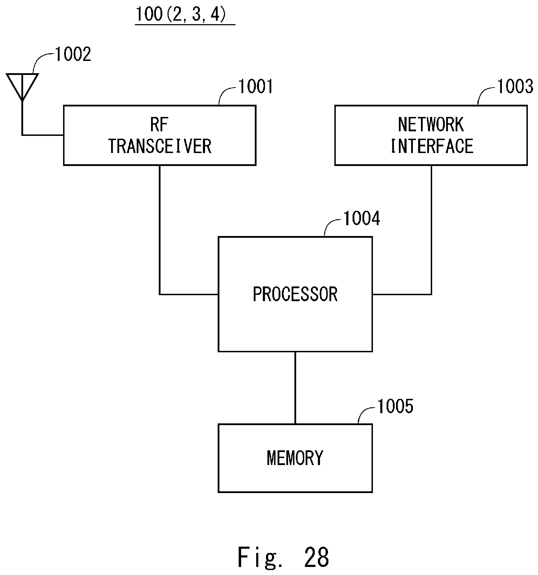

Next, examples of hardware configurations of the RAN node 100 (the RAN nodes 2 to 4), the UE 6, the CN node 7, the OAM apparatus 8, and the RAN intelligence apparatus 9 the described in the aforementioned example embodiments are described hereinafter. Fig. 28 shows a block diagram showing the configuration example of the RAN node according to each example embodiment. Referring to Fig. 28, the RAN node 100 (the RAN nodes 2 to 4) includes an RF transceiver 1001, a network interface 1003, a processor 1004, and a memory 1005. The RF transceiver 1001 performs an analog RF signal processing for communicating with UEs. The RF transceiver 1001 may include multiple transceivers. The RF transceiver 1001 is coupled with the antenna 1002 and the processor 1004. The RF transceiver 1001 receives modulation symbol data (or OFDM symbol data) from the processor 1004, generates a transmission RF signal, and supplies the transmission RF signal to the antenna 1002. The RF transceiver 1001 generates a baseband reception signal on the basis of a received RF signal received by the antenna 1002, and supplies the signal to the processor 1004.

The network interface 1003 is used to communicate with a network node (e.g., another core network node). The network interface 1003 may include a network interface card (NIC) conforming to IEEE 802.3 series, for example.

The processor 1004 performs data plane processing that includes digital baseband signal processing for wireless communication, and control plane processing. For example, in cases of LTE and 5G, the digital baseband signal processing by the processor 1004 may include signal processing for a MAC layer and a Physical layer.

The processor 1004 may include multiple processors. For example, the processor 1004 may include a modem processor (e.g., DSP) that performs the digital baseband signal processing, and a protocol stack processor (e.g., a CPU or an MPU) that performs the control plane processing.

The memory 1005 includes a combination of a volatile memory and a nonvolatile memory. The memory 1005 may include multiple memory devices that are physically independent. The volatile memory may be, for example, a static random access memory (SRAM) or a dynamic RAM (DRAM), or a combination thereof. The nonvolatile memory may be a mask read only memory (MROM), an electrically erasable programmable ROM (EEPROM), a flash memory or a hard disk drive, or any combination thereof. The memory 1005 may include a storage arranged apart from the processor 1004. In this case, the processor 1004 may access the memory 1005 via the network interface 1003 or an I/O interface, not shown.

The memory 1005 may store software modules (computer programs) including data and instructions for performing processes by the RAN node 100 (the RAN nodes 2 to 4) described by the aforementioned multiple example embodiments. In some implementations, the processor 1004 may be configured to perform the processes of the RAN node 100 (the RAN nodes 2 to 4) described in the aforementioned example embodiments, by reading the software modules from the memory 1005 and executing the modules.

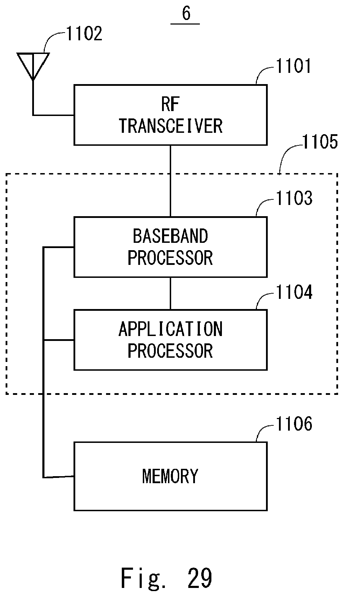

Fig. 29 shows a block diagram showing the configuration example of the UE 6. A radio frequency (RF) transceiver 1101 performs analog RF signal processing for communicating with the RAN node 100 (the RAN nodes 2 to 4). The analog RF signal processing performed by the RF transceiver 1101 includes frequency up-conversion, frequency down-conversion, and amplification. The RF transceiver 1101 is coupled with an antenna 1102 and a baseband processor 1103. That is, the RF transceiver 1101 receives modulation symbol data (or OFDM symbol data) from the baseband processor 1103, generates a transmission RF signal, and supplies the transmission RF signal to the antenna 1102. The RF transceiver 1101 generates baseband reception signal on the basis of a received RF signal received by the antenna 1102, and supplies the signal to the baseband processor 1103.

The baseband processor 1103 performs digital baseband signal processing for wireless communication (data plane processing), and control plane processing. The digital baseband signal processing includes (a) data compression/decompression, (b) data segmentation/concatenation, and (c) transfer format (transfer frame) generation/decomposition. Furthermore, the digital baseband signal processing includes (d) transfer path encoding/decoding, (e) modulation (symbol mapping)/demodulation, and (f) OFDM symbol data (baseband OFDM signal) generation by the inverse fast Fourier transform (IFFT). On the other hand, the control plane processing includes communication management of a layer 1 (e.g., transmission power control), a layer 2 (e.g., wireless resource management, and a hybrid automatic repeat request (HARQ) process), and a layer 3 (e.g., signaling about attach, mobility, and communication management).

For example, in cases of LTE and 5G, the digital baseband signal processing by the baseband processor 1103 may include signal processing on a Packet Data Convergence Protocol (PDCP) layer, a Radio Link Control (RLC) layer, a MAC layer, and a Physical layer. The control plane processing by the baseband processor 1103 may include processes of a Non-Access Stratum (NAS) protocol, an RRC protocol, and a MAC CE.

The baseband processor 1103 may include a modem processor (e.g., a digital signal processor (DSP)) that performs the digital baseband signal processing and a protocol stack processor (e.g., a central processing unit (CPU) that performs the control plane processing, or a micro processing unit (MPU)). In this case, the protocol stack processor that performs the control plane processing may be commonalized with an application processor 1104 described later.

The application processor 1104 is also called a CPU, an MPU, a microprocessor, or a processor core. The application processor 1104 may include multiple processors (multiple processor cores). The application processor 1104 achieves various functions of the UE 6 by executing a system software program (Operating System (OS)) and various application programs read from a memory 1106 or a memory, not shown. The application program may be, for example, a call application, a web browser, a mailer, a camera operation application, or a music playback application.

In some implementations, as shown by broken lines (1105) in Fig. 29, the baseband processor 1103 and the application processor 1104 may be integrated on a single chip. In other words, the baseband processor 1103 and the application processor 1104 may be implemented as a single system on chip (SoC) device 1105. The SoC device may be sometimes called a system large scale integration (LSI) or chipset.

The memory 1106 is a volatile memory or a nonvolatile memory, or a combination thereof. The memory 1106 may include multiple memory devices that are physically independent. The volatile memory may be, for example, a static random access memory (SRAM) or a dynamic RAM (DRAM), or a combination thereof. The nonvolatile memory may be a mask read only memory (MROM), an electrically erasable programmable ROM (EEPROM), a flash memory or a hard disk drive, or any combination thereof. For example, the memory 1106 may include an external memory device accessible from the baseband processor 1103, the application processor 1104, and the SoC 1105. The memory 1106 may include a built-in memory device integrated in the baseband processor 1103, the application processor 1104, or the SoC 1105. Furthermore, the memory 1106 may include a memory in a universal integrated circuit card (UICC).

The memory 1106 may store software modules (computer programs) including instructions and data for performing the processes by the UE 6 described in the aforementioned multiple example embodiments. In some implementations, the baseband processor 1103 or the application processor 1104 may be configured to perform the processes of the UE 6 described in the aforementioned example embodiments by reading the software modules from the memory 1106 and executing the modules.

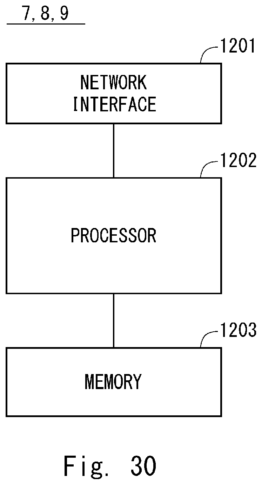

Fig. 30 is a block diagram showing a configuration example of a network apparatus such as the CN node 7, the OAM apparatus 8, and the RAN intelligence apparatus 9 (hereinafter also referred to as the CN node 7 or the like). Referring to Fig. 30, the CN node 7 or the like includes a network interface 1201, a processor 1202, and a memory 1203. The network interface 1201 is used to communicate with another network node that constitutes the communication system. The network interface 1201 may include a network interface card (NIC) conforming to IEEE 802.3 series, for example.

The processor 1202 performs the processes of the CN node 7 or the like described using the sequence diagrams and flowcharts in the aforementioned example embodiments, by reading the software (computer program) from the memory 1203 and executing the software. The processor 1202 may be, for example, a microprocessor, an MPU (Micro Processing Unit), or a CPU (Central Processing Unit). The processor 1202 may include multiple processors.

The memory 1203 includes a combination of a volatile memory and a nonvolatile memory. The memory 1203 may include a storage arranged apart from the processor 1202. In this case, the processor 1202 may access the memory 1203 via an I/O interface, not shown.

In the example in Fig. 30, the memory 1203 is used to store software modules. The processor 1202 performs the processes of the CN node 7 or the like described in the aforementioned example embodiments, by reading the software modules from the memory 1203 and executing the modules.

As described with reference to Fig. 30, each processor included in the CN node 7 or the like executes one or more programs including instructions for causing the computer to perform the algorithms described with reference to the drawings.

In the example described above, the programs are stored using various types of non-transitory computer-readable media, and can be supplied to the computer. The non-transitory computer-readable media may include tangible storage media that have various substantial entities. Examples of the non-transitory computer-readable media include a magnetic recording medium (e.g., a flexible disk, magnetic tape, and a hard disk drive), an magnetooptical recording medium (e.g., a magnetooptical disk). Further, examples of the non-transitory computer-readable media include a CD-ROM (Read Only Memory), a CD-R, and a CD-R/W. Further, examples of the non-transitory computer-readable media include a semiconductor memory. Examples of the semiconductor memory include a mask ROM, a PROM (Programmable ROM), an EPROM (Erasable PROM), a flash ROM, and a RAM (Random Access Memory)). Further, the programs may be supplied to the computer through various types of non-transitory computer readable media. Examples of the transitory computer readable media include electric signals, optical signals, and electromagnetic waves. The transitory computer readable media can supply programs to the computer via a wired communication path, such as an electric line and an optical fiber, or a wireless communication path.

The User Equipment ("UE", or "mobile terminal", "mobile station", "mobile device" or "wireless device") in the present disclosure is an entity connected to a network via a wireless interface.

It should be noted that the present disclosure is not limited to a dedicated communication device, and can be applied to any device having a communication function as explained in the following paragraphs.

The terms "User Equipment" or "UE" (as the term is used by 3GPP), "mobile station", "mobile device", and "wireless device" are generally intended to be synonymous with one another, and include standalone mobile stations, such as terminals, cell phones, smart phones, tablets, cellular IoT (Internet of Things) devices, IoT devices, and machinery. It will be appreciated that the terms "mobile station" and "mobile device" also encompass devices that remain stationary for a long period of time.

A UE may, for example, be an item of equipment for production or manufacture and/or an item of energy related machinery (for example equipment or machinery such as: boilers; engines; turbines; solar panels; wind turbines; hydroelectric generators; thermal power generators; nuclear electricity generators; batteries; nuclear systems and/or associated equipment; heavy electrical machinery; pumps including vacuum pumps; compressors; fans; blowers; oil hydraulic equipment; pneumatic equipment; metal working machinery; manipulators; robots and/or their application systems; tools; molds or dies; rolls; conveying equipment; elevating equipment; materials handling equipment; textile machinery; sewing machines; printing and/or related machinery; paper converting machinery; chemical machinery; mining and/or construction machinery and/or related equipment; machinery and/or implements for agriculture, forestry and/or fisheries; safety and/or environment preservation equipment; tractors; precision bearings; chains; gears; power transmission equipment; lubricating equipment; valves; pipe fittings; and/or application systems for any of the previously mentioned equipment or machinery etc.).

A UE may, for example, be an item of transport equipment (for example transport equipment such as: rolling stocks; motor vehicles; motor cycles; bicycles; trains; buses; carts; rickshaws; ships and other watercraft; aircraft; rockets; satellites; drones; balloons etc.).

A UE may, for example, be an item of information and communication equipment (for example information and communication equipment such as: electronic computer and related equipment; communication and related equipment; electronic components etc.).

A UE may, for example, be a refrigerating machine, a refrigerating machine applied product, an item of trade and/or service industry equipment, a vending machine, an automatic service machine, an office machine or equipment, a consumer electronic and electronic appliance (for example a consumer electronic appliance such as: audio equipment; video equipment; a loud speaker; a radio; a television; a microwave oven; a rice cooker; a coffee machine; a dishwasher; a washing machine; a dryer; an electronic fan or related appliance; a cleaner etc.).

A UE may, for example, be an electrical application system or equipment (for example an electrical application system or equipment such as: an x-ray system; a particle accelerator; radio isotope equipment; sonic equipment; electromagnetic application equipment; electronic power application equipment etc.).

A UE may, for example, be an electronic lamp, a luminaire, a measuring instrument, an analyzer, a tester, or a surveying or sensing instrument (for example a surveying or sensing instrument such as: a smoke alarm; a human alarm sensor; a motion sensor; a wireless tag etc.), a watch or clock, a laboratory instrument, optical apparatus, medical equipment and/or system, a weapon, an item of cutlery, a hand tool, or the like.

A UE may, for example, be a wireless-equipped personal digital assistant or related equipment (such as a wireless card or module designed for attachment to or for insertion into another electronic device (for example a personal computer, electrical measuring machine)).

A UE may be a device or a part of a system that provides applications, services, and solutions described below, as to "internet of things (IoT)", using a variety of wired and/or wireless communication technologies.

Internet of Things devices (or "things") may be equipped with appropriate electronics, software, sensors, network connectivity, and/or the like, which enable these devices to collect and exchange data with each other and with other communication devices.

IoT devices may comprise automated equipment that follows software instructions stored in an internal memory.

IoT devices may operate without requiring human supervision or interaction. IoT devices might also remain stationary and/or inactive for a long period of time.

IoT devices may be implemented as a part of a (generally) stationary apparatus. IoT devices may also be embedded in non-stationary apparatus (e.g., vehicles) or attached to animals or persons to be monitored/tracked.

It will be appreciated that IoT technology can be implemented on any communication devices that can connect to a communications network for sending/receiving data, regardless of whether such communication devices are controlled by human input or software instructions stored in memory.

It will be appreciated that IoT devices are sometimes also referred to as Machine-Type Communication (MTC) devices or Machine-to-Machine (M2M) communication devices.

It will be appreciated that a UE may support one or more IoT or MTC applications.

Some examples of MTC applications are listed in the following table (source: 3GPP TS 22.368 V13.2.0, Annex B, the contents of which are incorporated herein by reference). This list is not exhaustive and is intended to be indicative of some examples of machine type communication applications.

**[Table 8]**

| **Service Area** | **MTC applications** |
|---|---|
| Security | Surveillance systems |
| | Backup for landline |
| | Control of physical access (e.g., to buildings) |
| | Car/driver security |
| Tracking & Tracing | Fleet Management |
| | Order Management |
| | Pay as you drive |
| | Asset Tracking |
| | Navigation |
| | Traffic information |
| | Road tolling |
| | Road traffic optimisation/steering |
| Payment | Point of sales |
| | Vending machines |
| | Gaming machines |
| Health | Monitoring vital signs |
| | Supporting the aged or handicapped |
| | Web Access Telemedicine points |
| | Remote diagnostics |
| Remote Maintenance/Control | Sensors |
| | Lighting |
| | Pumps |
| | Valves |
| | Elevator control |
| | Vending machine control |
| | Vehicle diagnostics |
| Metering | Power |
| | Gas |
| | Water |
| | Heating |
| | Grid control |
| | Industrial metering |
| Consumer Devices | Digital photo frame |
| | Digital camera |
| | eBook |

Applications, services, and solutions may be an MVNO (Mobile Virtual Network Operator) service, an emergency radio communication system, a PBX (Private Branch eXchange) system, a PHS/Digital Cordless Telecommunications system, a POS (Point of sale) system, an advertise calling system, an MBMS (Multimedia Broadcast and Multicast Service), a V2X (Vehicle to Everything) system: Vehicle-to-vehicle communication and road-to-vehicle/pedestrian-to-vehicle communication) services/systems, a train radio system, a location related service, a Disaster/Emergency Wireless Communication Service/System, IoT services/systems, a community service, a video streaming service, a femto cell application service, a VoLTE (Voice over LTE) service, a wireless TAG services/systems, a charging service, a radio on demand service, a roaming service, an activity monitoring service, a telecom carrier/communication NW selection service, a functional restriction service, a PoC (Proof of Concept) service, a personal information management service, an ad-hoc network/DTN (Delay Tolerant Networking) service, etc.

Further, the above-described UE categories are merely examples of applications of the technical ideas and example embodiments described in the present document. Needless to say, these technical ideas and embodiments are not limited to the above-described UE and various modifications can be made thereto.

Note that the present disclosure is not limited to the above-described example embodiments and various changes may be made therein without departing from the spirit and scope of the present disclosure. Further, the present disclosure may be implemented by combining example embodiments with one another.

This application claims priority based on Japanese Patent Application No. 2021-060425 filed on March 31, 2021, and the entire disclosure thereof is incorporated herein.

### Reference Signs List

1, 10, 20, 30 COMMUNICATION SYSTEM
2, 3, 4, 100 RAN NODE
101, 61 COMMUNICATION UNIT
102, 62 CONTROL UNIT
5 -1, 5 -2 CELL
6 UE
7 CN NODE
8 OAM APPARATUS
9 RAN INTELLIGENCE UNIT

## Claims

1. A radio access network (RAN) node configured to include an Artificial Intelligence (AI) function of performing control of communication based on information received from another apparatus, wherein
the RAN node comprises:
at least one memory; and
at least one processor connected to the at least one memory, and
the at least one processor is configured to transmit, to another RAN node, first information indicating that the RAN node is an RAN node including the AI function.

2. The RAN node according to claim 1, wherein the at least one processor is configured to transmit an establishment request message, the establishment request message containing first information and requesting establishment of an interface with the other RAN node.

3. The RAN node according to claim 1 or 2, wherein the at least one processor is configured to receive second information from the other RAN node, the second information indicating whether or not the other RAN node accepts to be managed by the RAN node.

4. The RAN node according to claim 3, wherein the at least one processor is configured to transmit an establishment response message of the interface with the other RAN node, the establishment response message containing the second information.

5. A radio access network (RAN) node configured to include an Artificial Intelligence (AI) function of performing control of communication based on information received from another apparatus, wherein
the RAN node comprises:
at least one memory; and
at least one processor coupled to the at least one memory, and
the at least one processor is configured to transmit, to another RAN node, a first message requesting the other RAN node to transmit Handover (HO) configuration information set in the other RAN node to the RAN node, and receive, from the other RAN node, a second message containing the HO configuration information.

6. The RAN node according to claim 5, wherein the HO configuration information contains a setting value of a parameter related to at least one HO event.

7. The RAN node according to claim 6, wherein the HO configuration information further contains an HO cause associated with each of the at least one HO event.

8. A radio access network (RAN) node configured to include an Artificial Intelligence (AI) function of performing control of communication based on information received from another apparatus, wherein
the RAN node comprises:
at least one memory; and
at least one processor coupled to the at least one memory, and
the at least one processor is configured to receive a message containing information about quality of the cell measured by a User Equipment (UE) after the UE has performed a handover from a first cell to a second cell and an indicator indicating whether or not the handover from the first cell to the second cell has been normally performed from another RAN node serving the second cell.

9. The RAN node according to claim 8, wherein the message contains quality information of the first cell and a neighbor cell adjacent to the first cell.

10. The RAN node according to claim 9, wherein the quality information contains at least one of Reference Signal Received Power (RSRP), Reference Signal Received Quality (RSRQ), and a Signal to Interference plus Noise Ratio (SINR).

11. The RAN node according to any one of claims 8 to 10, wherein the message contains RLF report information related to a radio link failure (RLF).

12. The RAN node according to any one of claims 8 to 11, wherein the message contains HO configuration information corresponding to an HO event that has been used to trigger a handover performed by the UE.

13. The RAN node according to any one of claims 8 to 12, wherein the message contains Quality of Service (QoS) information.

14. The RAN node according to claim 13, wherein the QoS information is related to a QoS flow and a QoS parameter.

15. The RAN node according to any one of claims 8 to 14, wherein
the message contains information indicating whether or not the handover is based on an unintended event, and
the handover based on the unintended event includes at least one of a Too Late Handover, a Too Early Handover, and a Handover to wrong cell.

16. A radio access network (RAN) node configured to include an Artificial Intelligence (AI) function of performing control of communication based on information received from another apparatus, wherein
the RAN node comprises:
at least one memory; and
at least one processor coupled to the at least one memory, and
the at least one processor is configured to transmit a message containing at least one of handover (HO) configuration information and assistance information related to a handover to at least one of another RAN node and a User Equipment (UE).

17. The RAN node according to claim 16, wherein the assistance information contains a probability of a success of a handover from a first cell served by the other RAN node to a second cell included in candidate cells each of which can be a target cell.

18. The RAN node according to claim 17, wherein the assistance information contains first information indicating whether or not a handover from the first cell to the second cell is recommended.

19. The RAN node according to any one of claims 16 to 18, wherein the message contains second information indicating whether at least one of the HO configuration information and the assistance information is used for a handover in a Radio Resource Control (RRC) connected state or for cell reselection in a state other than the RRC connected state.

20. The RAN node according to claim 19, wherein the at least one processor is configured to transmit, to the other RAN node, the message containing the second information indicating that at least one of the HO configuration information and the assistance information is used for a handover in the RRC connected state.

21. The RAN node according to claim 20, wherein the assistance information contains an estimated number of UEs that are expected to perform a handover to a first cell served by the other RAN node within a predetermined time.

22. The RAN node according to claim 20 or 21, wherein the HO configuration information contains a setting value of a parameter related to at least one HO event.

23. The RAN node according to any one of claims 20 to 22, wherein the HO configuration information further contains an HO cause associated with each of the at least one HO event.

24. The RAN node according to any one of claims 20 to 23, wherein the at least one processor is configured to transmit, to the UE, the message containing the second information indicating that at least one of the HO configuration information and the assistance information is used for cell reselection in the state other than the RRC connected state.

25. A radio access network (RAN) node comprising:
at least one memory; and
at least one processor coupled to the at least one memory, wherein
the at least one processor is configured to receive, from another RAN node including an Artificial Intelligence (AI) function of performing control of communication based on information received from another apparatus, first information indicating that the other RAN node is an RAN node including the AI function.

26. A radio access network (RAN) node comprising:
at least one memory; and
at least one processor coupled to the at least one memory, wherein
the at least one processor is configured to receive, from another RAN node including an Artificial Intelligence (AI) function of performing control of communication based on information received from another apparatus, a first message requesting the RAN node to transmit Handover (HO) configuration information set in the RAN node, and transmit, to the other RAN node, a second message containing the HO configuration information to the other RAN node.

27. A radio access network (RAN) node comprising:
at least one memory; and
at least one processor coupled to the at least one memory, wherein
the at least one processor is configured to transmit a message containing information about quality of the cell measured by a User Equipment (UE) after the UE has performed a handover from a first cell to a second cell and an indicator indicating whether or not the handover from the first cell to the second cell has been normally performed to another RAN node including an Artificial Intelligence (AI) function of performing control of communication based on information received from another apparatus.

28. A radio access network (RAN) node comprising:
at least one memory; and
at least one processor coupled to the at least one memory, wherein
the at least one processor is configured to receive, from another RAN node including an Artificial Intelligence (AI) function of performing control of communication based on information received from another apparatus, a message containing at least one of handover (HO) configuration information and assistance information related to a handover.

29. A User Equipment (UE) comprising:
at least one memory; and
at least one processor coupled to the at least one memory, wherein
the at least one processor is configured to transmit a measurement report containing information about quality of the cell measured by the UE after the UE has performed a handover from a first cell to a second cell to a radio access network (RAN) node serving the second cell.

30. A User Equipment (UE) comprising:
at least one memory; and
at least one processor coupled to the at least one memory, wherein
the at least one processor is configured to receive, from an RAN node including an Artificial Intelligence (AI) function of performing control of communication based on information received from another apparatus, a message containing Handover (HO) configuration information and assistance information related to a handover.

31. A method performed by a radio access network (RAN) node, wherein
the RAN node is configured to include an Artificial Intelligence (AI) function of performing control of communication based on information received from another apparatus, and
the method comprises transmitting first information indicating that the RAN node is an RAN node including the AI function to another RAN node.

32. A method performed by a radio access network (RAN) node, wherein
the RAN node is configured to include an Artificial Intelligence (AI) function of performing control of communication based on information received from another apparatus, and
the method comprises:
transmitting, to another RAN node, a first message requesting the other RAN node to transmit Handover (HO) configuration information set in the other RAN node to the RAN node; and
receiving, from the other RAN node, a second message containing the HO configuration information.

33. A method performed by a radio access network (RAN) node, wherein
the RAN node is configured to include an Artificial Intelligence (AI) function of performing control of communication based on information received from another apparatus, and
the method comprises receiving a message containing information about quality of the cell measured by a User Equipment (UE) after the UE has performed a handover from a first cell to a second cell and an indicator indicating whether or not the handover from the first cell to the second cell has been normally performed from another RAN node serving the second cell.

34. A method performed by a radio access network (RAN) node, wherein
the RAN node is configured to include an Artificial Intelligence (AI) function of performing control of communication based on information received from another apparatus, and
the method comprises transmitting a message containing at least one of handover (HO) configuration information and assistance information related to a handover to at least one of another RAN node and a User Equipment (UE).
